# EUROPEAN PATENT APPLICATION

(11) **EP 4 811 214 A2**
(43) Date of publication of application: **23.09.2026**
(21) Application number: 26164890.1
(22) Date of filing: 16.03.2026
(51) Int. Cl.: G06N 3/02, G06F 8/30, G06F 11/34

(54) **GENERATING RESPONSES TO QUERIES USING ONE OR MORE NEURAL NETWORKS**

(30) Priority: 16.03.2025 IN 202511023275; 08.07.2025 US 202519263148
(71) Applicant: Nvidia Corporation, Santa Clara, CA 95051 (US)
(72) Inventor: DAMANI, Sana, Santa Clara, 95051 (US); LABUS, Peter, Santa Clara, 95051 (US); GUNJAL, Ramesh Dagadubhau, Santa Clara, 95051 (US); HARI, Siva Kumar Sastry, Santa Clara, 95051 (US); SANAN, Navyaa, Santa Clara, 95051 (US)
(74) Representative: Mathys & Squire

(57) **Abstract**

Apparatuses, systems, and techniques to use one or more neural networks to generate one or more responses to the one or more user queries. In at least one embodiment, a processor comprises processing circuitry to use one or more neural networks to generate computer program code to obtain performance information of one or more programs performed by one or more graphics processing units (GPUs) based, at least in part, on one or more user queries indicating the one or more programs and perform the computer program code to generate one or more responses to the one or more user queries.

## Description

### CROSS-REFERENCE TO RELATED APPLICATIONS

This application claims the benefit of Indian Provisional Application No. 202511023275, titled "GENERATING RESPONSES TO QUERIES USING ONE OR MORE NEURAL NETWORKS," filed March 16, 2025, the contents of which are hereby incorporated by reference in their entirety.

### TECHNICAL FIELD

At least one embodiment pertains to processing resources used to generate one or more responses to one or more queries using one or more neural networks.

### BACKGROUND

In computing systems with graphics processing units (GPUs), optimizing the performance of the GPUs is important to maintain high performance and efficiency. Optimization of GPU performance can be a difficult task for users, as GPU programs can be very complex and points of optimization can be difficult to identify. The amount of memory, time, or computing resources used to optimize performance of GPUs can be improved.

### SUMMARY

The invention is defined by the claims. In order to illustrate the invention, aspects and embodiments which may or may not fall within the scope of the claims are described herein.

Apparatuses, systems, and techniques to use one or more neural networks to generate one or more responses to the one or more user queries. In at least one embodiment, a processor comprises processing circuitry to use one or more neural networks to generate computer program code to obtain performance information of one or more programs performed by one or more graphics processing units (GPUs) based, at least in part, on one or more user queries indicating the one or more programs and perform the computer program code to generate one or more responses to the one or more user queries.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

FIG. 1 is a block diagram of an example system to generate one or more responses using one or more neural networks, in accordance with at least one embodiment;
FIG. 2 is a block diagram of an example system using a general agent and/or a report agent to generate one or more answers, in accordance with at least one embodiment;
FIG. 3 is an example of a user interface, in accordance with at least one embodiment;
FIG. 4 is a block diagram of a system using one or more neural networks to perform information retrieval, in accordance with at least one embodiment;
FIG. 5 is a flow diagram showing a method to provide one or more answers to a prompt, in accordance with at least one embodiment;
FIG. 6 is a flow diagram showing a method to use a general agent to provide one or more answers, in accordance with at least one embodiment;
FIG. 7 is a flow diagram showing a method to use a report agent to provide one or more answers, in accordance with at least one embodiment;
FIG. 8A is a block diagram of an example generative language model system suitable for use in implementing at least some embodiments of the present disclosure;
FIG. 8B is a block diagram of an example generative language model that includes a transformer encoder-decoder suitable for use in implementing at least some embodiments of the present disclosure;
FIG. 8C is a block diagram of an example generative language model that includes a decoder-only transformer architecture suitable for use in implementing at least some embodiments of the present disclosure;
FIG. 9 is a block diagram of an example computing device suitable for use in implementing at least some embodiments of the present disclosure; and
FIG. 10 is a block diagram of an example data center suitable for use in implementing at least some embodiments of the present disclosure.

### DETAILED DESCRIPTION

In an example, techniques described herein improve performance of graphics processing units (GPUs) in computing systems by, based on a user query about performance of a GPU, using one or more large language models (LLMs) to generate code to obtain information to generate a response to the user query, causing the code to be performed or otherwise executed to obtain the information, and using the information to generate the response. This addresses challenges users may face when optimizing performance of GPUs, as users may desire to improve performance of programs using the GPUs, and may also have access to GPU performance data, but may not have the appropriate guidance to perform optimizations. Techniques described herein may improve user processes of optimizing performance of their programs performed using GPUs by obtaining, from a user, a question about performance of their programs, generating specific code that can be used to obtain information to generate a response to the question, such as by extracting the information from GPU performance data, performing the specific code to obtain the information, and using the information to generate specific guidance or analysis pertaining to the user and their programs. In this manner, users may obtain guidance on how to optimize performance that is specific to their programs and GPUs.

Techniques described herein may involve a computing system that includes one or more LLMs. The computing system may include one or more agents that implement the one or more LLMs and provide a user interface that users can use to provide queries about performance of their programs. The queries may include general questions about usage and metrics; general questions about GPU architecture and programming models; program specific questions about performance bottlenecks; program specific questions about optimization advice to address bottlenecks; general or program specific questions about occupancy; performance comparison queries (e.g., given two kernels with their reports, compute speedup and identify the root cause of the performance difference); and/or any suitable queries relating to one or more GPUs and one or more programs.

The computing system may cause the one or more agents to process the queries using the one or more LLMs to generate responses to the queries. An agent may generate scripts to extract performance information from performance reports to answer queries. An agent may utilize multiple tools, such as those described herein, as well as perform retrieval-augmented generation (RAG) processes to retrieve context and reduce hallucinations to generate responses. The computing system may implement or otherwise utilize a tool that generates a version of a source program with profile information markers to provide more source-level context to answer more general questions about the performance of the program including the performance bottlenecks, the root cause of the performance issues, and optimization suggestions that specify what changes to the kernel in question will help improve its performance. The computing system may cause the scripts to be performed to obtain the performance information to answer queries. In some examples, the performance information may be analyzed by other agents or neural networks and further analysis can be provided as part of a response. The agents may also answer generic user queries about GPU hardware and software by searching GPU documentation and the Internet, and may also provide optimization advice based on the performance information.

In the preceding and following description, numerous specific details are set forth to provide a more thorough understanding of at least one embodiment. However, it will be apparent to one skilled in the art that the inventive concepts may be practiced without one or more of these specific details.

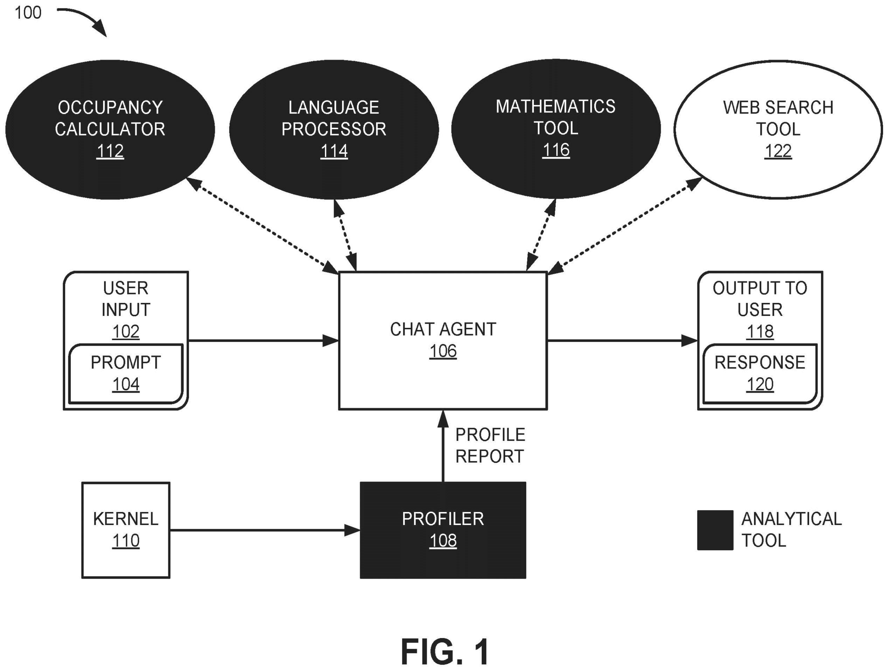

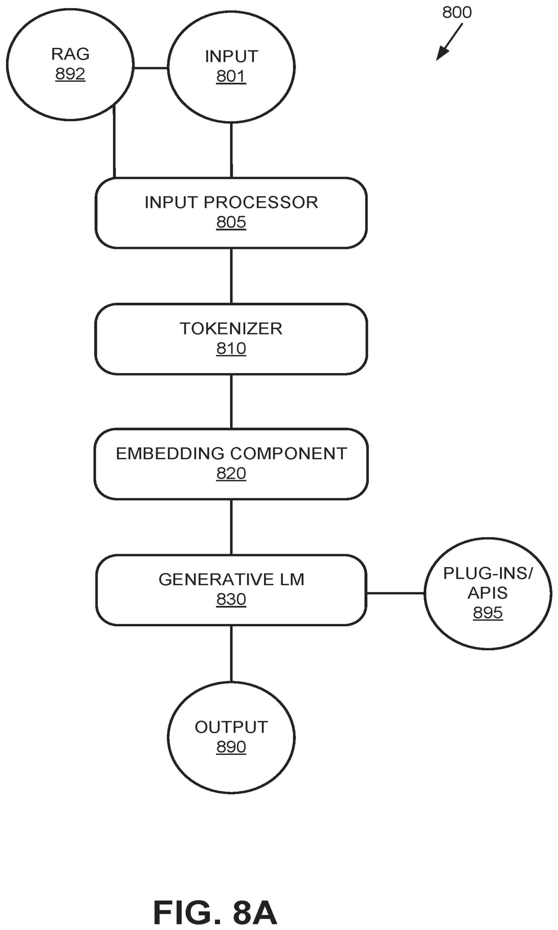

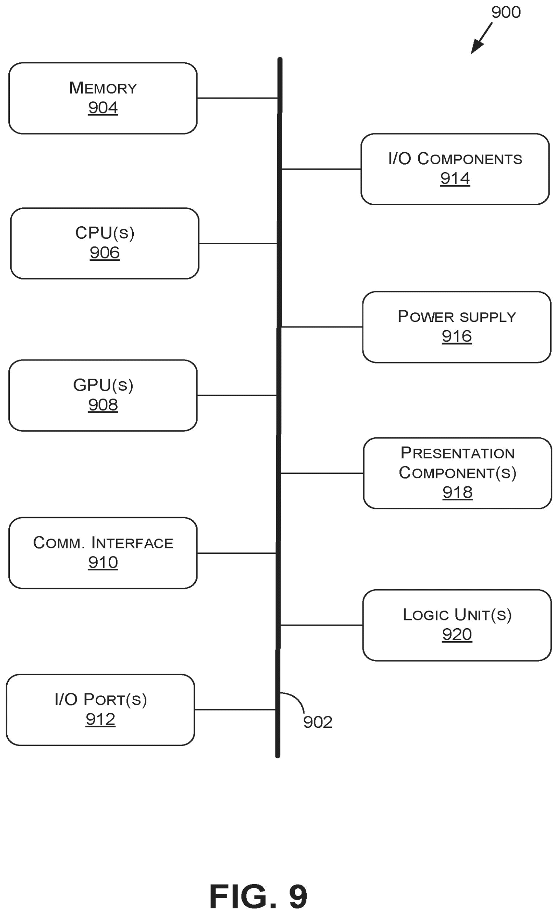

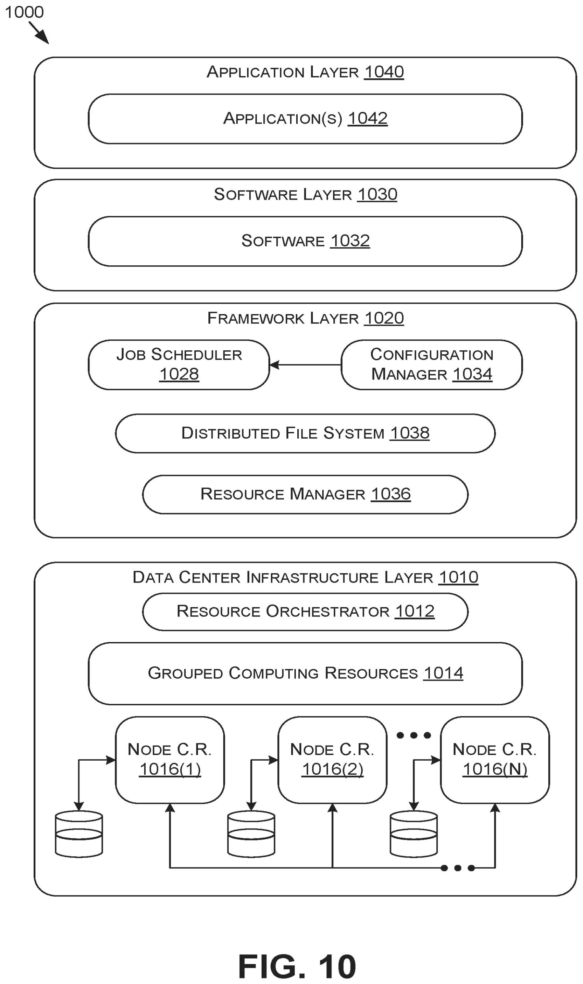

With reference to FIG. 1, FIG. 1 is an example system 100 to generate one or more responses using an LLM, in accordance with some embodiments of the present disclosure. It should be understood that this and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out using one or more processors executing instructions stored in one or more memories. For example, in some embodiments, the system and methods described herein may be implemented using one or more generative language models (e.g., as described in FIGS. 8A-8C), one or more computing devices or components thereof (e.g., as described in FIG. 9), and/or one or more data centers or components thereof (e.g., as described in FIG. 10).

FIG. 1 is a block diagram of an example system 100 to generate one or more responses using a large language model (LLM), in accordance with at least one embodiment. The system 100 may include one or more prompts 104 as a user input 102, a chat agent 106, one or more analytical tools (e.g., profiler 108, occupancy calculator 112, language processor 114, mathematical tool 116, and/or one or more tools described herein), one or more kernels 110, one or more outputs to a user 118 (e.g., response 120), one or more components described herein, and/or one or more combinations thereof.

System 100 may include an LLM-based chat interface for one or more compute profiling tools. As an example, a chat agent 106, also referred to as an agent, chatbot, chatbot agent, and/or variations thereof, generates one or more answers as a response 120 to one or more user inputs 102 (e.g., prompt 104 and/or queries). The chat agent 106 may receive one or more user inputs 102, which may include one or more prompts 104. The chat agent 106 may implement or otherwise be associated with one or more user interfaces that users can use to provide the user input 102, such as through input text, audio, and/or variations thereof. In some embodiments, the chat agent 106 is implemented as part of a software program that is performed using computer hardware.

The prompt 104 may include one or more queries, such as tool usage-related inquiries (e.g., queries relating to the profiler tool), GPU-related questions, kernel specific prompts, and/or any suitable query regarding performance of one or more GPUs, kernels, programs, and/or variations thereof. As an example, performance information may include information from one or more performance reports. As an example, tool usage-related inquiries may include queries related to a tool's support for specific programming model features, configuration options, and/or error handling. As an example, GPU-related questions include questions concerning metric explanations, architecture details, and/or one or more parallel computing platform features. Kernel specific prompts (e.g., queries) may include profile report-related questions, such as occupancy limiters, one or more program hot spots, GPU utilization, and/or per-instruction metrics. As an example, a kernel specific prompt may include queries pertaining to a request for optimization advice tailored to a specific kernel and/or application.

The chat agent 106 may include or otherwise implement one or more agents. The system 100 may utilize an agentic workflow that may include the one or more agents, where each agent includes or otherwise implements an LLM, a system prompt, and/or one or more tools to assist in answering user queries. A chat agent 106 may include one or more tools, such as: retrieval-augmented generation (RAG) to potentially reduce hallucinations by fetching context related to profiler documentation, a programming model guide, Report Interface examples and API documentation, and/or GPU architecture documentation; a web search tool to fetch relevant context from a blog and/or a developer forum (e.g., web search tool 122); and/or an occupancy calculator; a computing language-based (e.g., Python) REPL of a report interface. Chat agent 106 may receive one or more user inputs 102, such as a prompt 104 (e.g., query). A tool such as those described herein may be implemented as part of a software program, module, service, and/or variations thereof.

Users may cause one or more programs (e.g., kernel 110) to be performed using one or more GPUs, and may obtain a profile report in connection with performance of the one or more programs from profiler 108. In some examples, the profiler 108 may be invoked automatically as part of use of the system 100 and the profile report may be obtained from the profiler 108. The profile report may be any suitable information pertaining to the performance of the one or more programs by the one or more GPUs, such as one or more performance reports, and can be implemented using any suitable data or file format. To extract information from the profile report, a chat agent 106 (e.g., LLM) may write and execute computing language scripts using a computing language-based interface referred to as a report interface. The profile report may be generated by GPU performance monitoring/optimization software, or through any suitable process. Since this may be a low-resource API, chat agent 106 (e.g., one or more LLMs) may not be trained on their usage. Instead, system 100 may rely on in-context learning techniques, such as few-shot prompting, and provide a guide for an API as part of the context. In some embodiments, the chat agent 106 is trained using sample scripts to generate code to obtain information from the profile report based on the user input 102.

For optimization advice, the chat agent 106 may analyze a kernel and profile to identify bottlenecks and recommend fixes, including one or more suggestions to use library functions and/or certain existing programming model/GPU features. System 100 may employ a workflow including using one or more agents in a supervisor-based network where each agent specializes in a different task, and a supervisor routes queries to an appropriate expert. For instance, there may be separate agents for general queries versus kernel-specific queries. In this scenario, a router or supervisor agent may first classify the query and then route it to the appropriate agent that invokes the requisite tools to generate a response. Additionally, the supervisor agent may provide constraints by filtering out one or more queries unrelated to the profiler. Agents may follow a ReAct-style iterative Thought-Action-Observation process to respond to one or more user queries, which could be tailored to user expertise (e.g., a beginner-level user might prefer a more verbose response with background and definitions of metrics and jargon while an expert-level user might prefer a succinct response).

In at least one embodiment, profiler 108 receives one or more kernels and/or telemetry data (e.g., date and/or time stamps, system performance metrics, user interactions, error reports, and other relevant operational data) as input. As an example, a profiler 108 may receive performance information to include one or more resource usage measurements of one or more GPUs resulting from performance of the one or more programs. In at least one embodiment, profiler 108 is one or more tools which may include or otherwise implement an LLM, and can be implemented as part of a software program. Chat agent 106 may generate one or more responses 120, such that quality of one or more responses 120 may be evaluated using a custom evaluation set assembled with expert knowledge of a tool (e.g., occupancy calculator 112, language processor 114, mathematical tool 116, and/or profiler 108) and anticipate one or more user queries. Ground truth answers may be collected manually using one or more results from a profiler 108 and information from available documentation.

The system 100 may, based on the prompt 104 indicating a query about performance of a kernel and GPU, invoke the profiler(s) 108 to obtain a profile report pertaining to performance of the particular kernel and GPU, and generate code to analyze the report(s). Profiler 108 may serve as a tool for analyzing and optimizing one or more programs by providing detailed insights into GPU resource usage and/or performance bottlenecks, such as information on GPU resource utilization and/or stall reasons per instruction. The chat agent 106 may utilize this data to generate outputs that identify one or more hot spots in a program and suggest one or more optimizations.

Chat agent 106 may also receive one or more outputs of an occupancy calculator 112. In at least one embodiment, occupancy calculator 112 is a tool, which may include or otherwise implement an LLM, and can be implemented as part of a software program. Occupancy calculator 112 may function as a tool to assist in calculating an occupancy information of one or more programs, such as a measure of how effectively a GPU's resources are being utilized, which GPU resources are being utilized, and/or any suitable information associated with performance of the one or more programs. Occupancy calculator 112 may receive one or more inputs, such as one or more block sizes, register usage, and/or shared memory usage to perform one or more calculations. Occupancy calculator 112 may be accessible via an interface (e.g., Python Interface, or any suitable interface), such as to allow the chat agent 106 to integrate information from the occupancy calculator 112 with information from other analytical tools (e.g., language processor 114, mathematics tool 116 and/or profiler 108). One or more outputs of occupancy calculator 112 to the chat agent 106 may include occupancy information such as one or more detailed reports on occupancy levels, such as to assist a developer to identify potential areas for optimization to improve the performance of one or more programs.

The chat agent 106 may also receive one or more outputs of a language processor 114. In at least one embodiment, language processor 114 is a tool, which may include or otherwise implement an LLM, and can be implemented as part of a software program. Language processor 114 may refer to a component within the system 100 designed to perform one or more scripts (e.g., Python scripts, or any suitable scripts of any suitable programming language), potentially as part of generating the response 120. Language processor 114 may receive one or more inputs, such as scripts that are generated to extract information from data files or reports, like those produced by profiling tools. The language processor 114 may execute or otherwise perform these scripts locally, allowing system 100 to retrieve and manipulate data without sharing sensitive information externally. One or more outputs from the language processor 114 to the chat agent 106 may include processed data or results derived from executing the one or more scripts, which may then be used to inform further actions or decisions within system 100. The chat agent 106 may utilize information from the mathematics tool 116, which may be a tool to perform one or more mathematics operations, and/or the web search tool 122, which may be a tool to perform one or more Internet searches and/or retrieve information through one or more web searches.

In at least one embodiment, system 100 includes a collection of one or more hardware and/or software computing resources with instructions that, when executed, performs processes such as those described herein. In at least one embodiment, system 100 is a software program executing on computer hardware, application executing on computer hardware, and/or variations thereof. In at least one embodiment, one or more processes of system 100 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 100 uses a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein.

In at least one embodiment, one or more components of the system 100 are implemented using any combination of any type of logic (e.g., software, hardware, firmware) and/or circuitry configured to perform a function as described. In at least one embodiment, software includes software packages, code, programming language, drivers, instructions, instruction sets, or some combination thereof. In at least one embodiment, hardware includes hardwired circuits, programmable circuits, state machine circuits, fixed function circuits, execution unit circuits, firmware with stored instructions executed by programmable circuits, or some combination thereof. Additionally, it should be noted that, while various embodiments described herein may be in reference to or specific to an LLM, any suitable neural network, model, algorithm, machine learning model, process, and/or variations thereof, can be utilized. Furthermore, an LLM such as those described herein may refer to any suitable implementation of a model to generate or otherwise process text, such as transformer-based models, RNN-based models, Seq2seq models, hybrid models, fine-tuned models, multimodal models and/or variations thereof, which can be implemented using any suitable data structures, instructions, and/or variations thereof.

System 100 may include one or more processors, such as one or more processors wherein the one or more processors are comprised in at least one of: a control system for an autonomous or semi-autonomous machine; a perception system for an autonomous or semi-autonomous machine; a system for performing simulation operations; a system for performing digital twin operations; a system for performing light transport simulation; a system for performing collaborative content creation for 3D assets; a system for performing deep learning operations; a system for performing remote operations; a system for performing real-time streaming; a system for generating or presenting one or more of augmented reality content, virtual reality content, or mixed reality content; a system implemented using an edge device; a system implemented using a robot; a system for performing conversational AI operations; a system implementing one or more multi-model language models; a system implementing one or more large language models (LLMs); a system implementing one or more vision language models (VLMs); a system for generating synthetic data; a system for generating synthetic data using AI; a system incorporating one or more virtual machines (VMs); a system implemented at least partially in a data center; a system implemented at least partially using cloud computing resources; and/or combinations thereof.

In at least one embodiment, system 100 includes one or more processors to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system 100 is, is included in, and/or otherwise includes systems illustrated in FIGS. 1-10 to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

In at least one embodiment, system 100 performs one or more processes illustrated in FIGS. 1-10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system 100 includes one or more hardware illustrated in FIGS. 8A - 10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

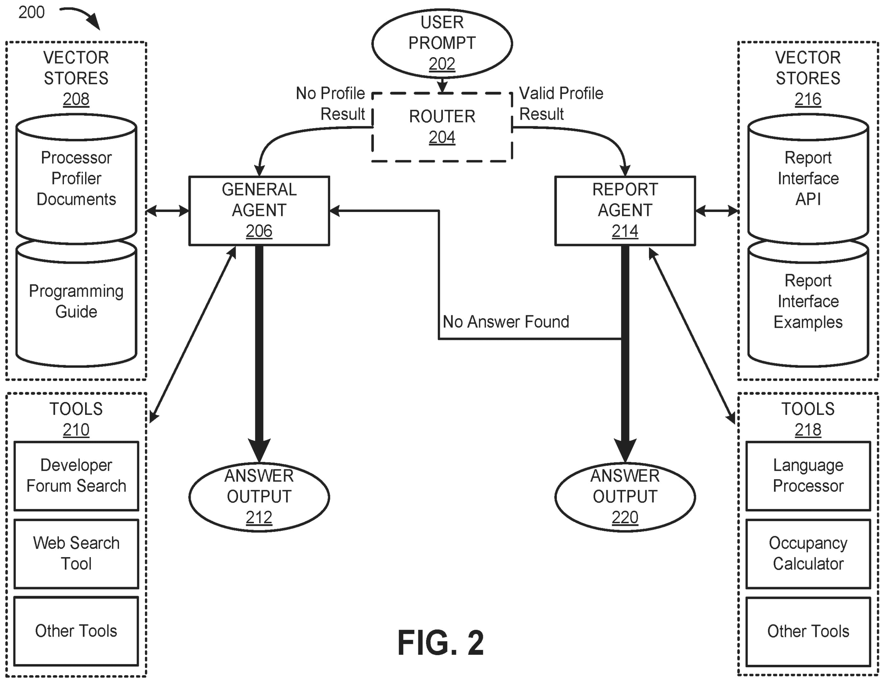

With reference to FIG. 2, FIG. 2 is an example system 200 to generate one or more responses using one or more LLMs, in accordance with some embodiments of the present disclosure. It should be understood that this and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out using one or more processors executing instructions stored in one or more memories. For example, in some embodiments, the system and methods described herein may be implemented using one or more generative language models (e.g., as described in FIGS. 8A-8C), one or more computing devices or components thereof (e.g., as described in FIG. 9), and/or one or more data centers or components thereof (e.g., as described in FIG. 10).

FIG. 2 is a block diagram of an example system 200 using a general agent and/or a report agent to generate one or more answers, in accordance with at least one embodiment. System 200 may include one or more user prompts 202, one or more routers 204, one or more general agents 206, one or more vector stores 208 and/or 216, one or more tools 210 and/or 218, one or more answer outputs 212 and/or 220, one or more report agents 214, one or more components described herein, and/or combinations thereof.

System 200 may provide or otherwise implement a user interface in which users may provide queries associated with performance analysis, such as through text or voice. The system may utilize a model, such as the GPT-4-Turbo model, an agent such as the React Agent, an occupancy calculator, a language processor, and/or a math tool, and/or any suitable models or agents. One or more inputs to the system 200 may include a report's details page, which may include GPU resource utilization and SOL information along with performance counters, one or more throughput matrices, and/or a source page, which may provide per instruction stall reasons.

A source page may be complex for LLMs to process, so system 200 may utilize one or more neural networks (e.g., GPT-4-Turbo) to generate a program (e.g., a computer program script) to extract relevant information, execute it with the language processor tool, and use that information to answer one or more queries. Additionally, system 200 may implement an agentic flow for profile-guided optimization which may suggest optimizations.

System 200 may receive one or more user inputs 102, such as a user prompt 202 to include one or more queries (e.g., tool usage-related queries and/or GPU-related questions). System 200 may include router 204, which may be a software program, module, or component that receives one or more user prompts 202, such as through one or more user interfaces. As an example, the router 204 may forward a user prompt 202 to a report agent 214 if the router 204 determines that the user prompt 202 pertains to a particular profile result. As another example, the router 204 may forward a user prompt 202 to a general agent 206 if the router 204 determines that the user prompt 202 does not pertain to a particular profile result. Router 204 may serve as a decision-making component within the system 200, such as to direct a user prompt 202 (e.g., a query) to the appropriate processing agents. Router 204 may receive one or more inputs, such as one or more user prompts or profile results, which could be used to determine the nature of a query-whether it is report-related or general. Router 204 may function by initially checking for the presence of a profile result, and based on this, routing the query to either a report-specific agent or a general agent. One or more answer outputs from router 204 may include a classification of a query and subsequent routing to a relevant agent, ensuring that system 200 efficiently processes and responds to one or more user queries.

System 200 may include one or more report agents 214, such as in series and/or parallel. Report agent 214 may function as a specialized component within system 200, such as to handle report-related queries (e.g., involving performance analysis and/or optimization). Report agent 214 may receive one or more inputs, such as one or more user prompts accompanied by one or more profile results, which could include detailed data from GPU profiling reports. Report agent 214 may operate by utilizing a programming language report interface (e.g., Python Report Interface (PRI), or any suitable interface) to extract relevant information from the profile reports to obtain the profile result information, and may generate and execute computer program scripts to do so. As an example, report agent 214 accesses one or more vector stores 216, such as by using one or more retrievers and/or one or more tools 218, such as language processor, occupancy calculator, and/or other tools described herein. One or more answer outputs 220 from report agent 214 may include detailed answers to user queries, leveraging extracted data to provide insights into GPU resource usage, bottlenecks, and/or optimization opportunities. Report agent 214 may be included in a larger network of agents (e.g., general agent and/or report agents), each tasked with specific roles in processing and responding to one or more user inquiries.

System 200 may include one or more general agents 206, such as in series and/or parallel. General agent 206 may be a component within system 200 to handle non-report related queries, potentially providing users with information about various programming models and general GPU concepts. General agent 206 may receive one or more inputs, such as one or more user prompts that do not include specific profile results, allowing it to focus on broader questions. General agent 206 may operate by utilizing retrieval-augmented generation (RAG) techniques, accessing resources like documentation (e.g., programming model documentation, hardware documentation, technical blogposts, video tutorials, and/or variations thereof) to generate one or more responses. As an example, general agent 206 may access one or more vector stores 208 (e.g., processor profiler documents and/or programming guide), such as by using one or more retrievers and/or one or more tools 210 (e.g., developer forum search and/or other tools described herein). One or more answer outputs 212 from general agent 206 may include one or more answers to one or more user queries, such as those not tied to specific profiling reports, offering insights into tool usage, GPU architecture, and/or programming models. General agent 206 may work alongside other agents within a network to ensure comprehensive coverage of user inquiries.

In at least one embodiment, system 200 includes one or more processors to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system 200 is, is included in, and/or otherwise includes systems illustrated in FIGS. 1-10 to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

In at least one embodiment, system 200 performs one or more processes illustrated in FIGS. 1-10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system 200 includes one or more hardware illustrated in FIGS. 8A - 10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

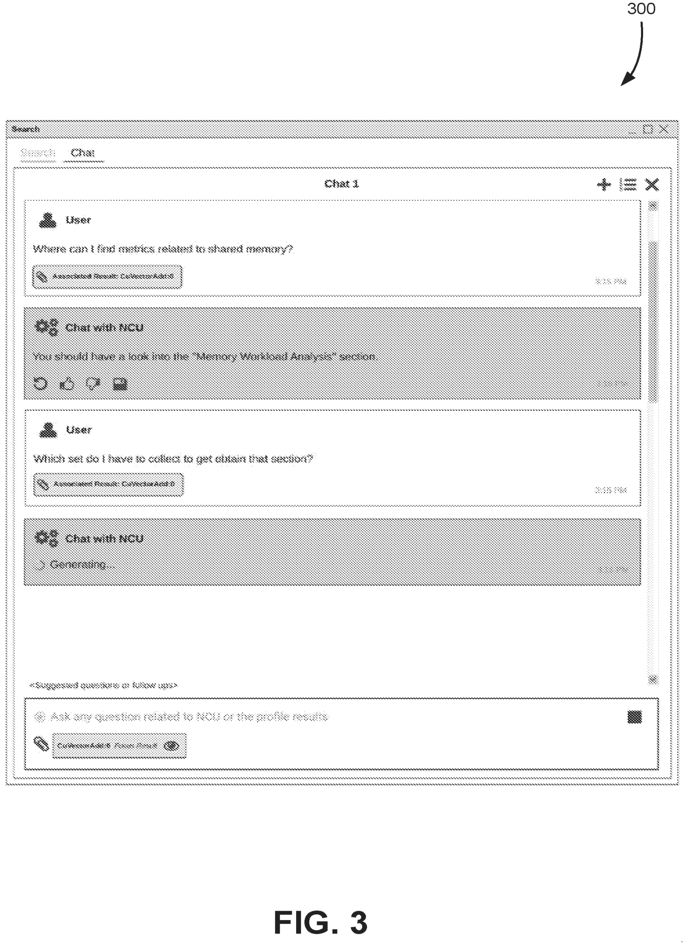

With reference to FIG. 3, FIG. 3 is an example of a user interface 300, in accordance with some embodiments of the present disclosure. It should be understood that this and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out using one or more processors executing instructions stored in one or more memories. For example, in some embodiments, the system and methods described herein may be implemented using one or more generative language models (e.g., as described in FIGS. 8A-8C), one or more computing devices or components thereof (e.g., as described in FIG. 9), and/or one or more data centers or components thereof (e.g., as described in FIG. 10).

FIG. 3 is an example of a user interface 300, in accordance with at least one embodiment. The user interface 300 may be implemented or otherwise provided by a system such as those described herein (e.g., system 100, 200, and/or 400). The system may provide interfaces for users to interact with a chatbot through a chat tool window, which could be integrated into a user interface (e.g., user interface of GPU performance monitoring/optimization software), potentially implemented in Qt using C++ as part of an application library, or in any suitable manner. This system using a user interface 300 might offer generic APIs that allow a frontend user interface 300 to communicate with the backend application, representing a client side of a client/server communication. The execution of a system may occur locally on a host side. One or more inputs into this system using a user interface may include one or more user queries and profile results, which may be processed to one or more generate one or more responses returned to a user via user interface 300.

To integrate a chat window into user interface 300, a system (e.g., system 100, 200, and/or 400) may use a tool window of a Universal Search feature by adding a "Chat" tab. This "Search" tool window of user interface 300 may provide access to both a universal "Search" and a "Chat" bot. User interface 300 may include a chat window to display a history of user-provided queries and their AI-generated responses in chronological order, with each query visually separated from one or more responses. One or more inputs into this system using a user interface 300 may include a human prompt and/or associated context, such as one or more profile results. One or more outputs from a chat window of a user interface 300 may include one or more formatted responses, one or more options to retry or vote on responses, and/or an ability to save a chat history.

Repeating the user prompt in a user interface 300 may provide context to one or more provided answers, such as when rereading the chat at a later stage. The associated profile results, on the other hand, may document which inputs were provided to the chatbot when generating the answer. The generated responses might include a formatted response appearing as a stream and/or a sign of processing, along with a "retry" button, "vote up"/"vote down" buttons, and/or a "save" button. This setup of a user interface 300 may enhance user interaction by allowing them to engage with the chatbot effectively and provide feedback on one or more responses.

Since large language models (LLMs) may require particular amounts of time to generate answers, partial answers could appear in a stream, allowing users to cancel requests if they are already satisfied with the response. LLMs may also commonly produce output utilizing Markdown syntax, which could be rendered with Qt's Rich Text Processing, or in any suitable manner. The user interface 300 may indicate whether processing is still ongoing. Given that LLM execution is not deterministic, a "retry" button may offer an ability to generate a new, possibly more helpful, answer. This button of user interface 300 may also be used to "rewind" the conversation to an earlier question, deleting the chat history of queries and responses that might have occurred in between. Users may always be prompted by user interface 300 for confirmation when using the "retry" button to ensure that potentially costly answers are not deleted by accident. Up/down vote buttons for user interface 300 may be used for tracking user satisfaction with one or more generated responses. A "save" button may enable a user to persist a chat history up to a certain point in some textual format, such as .txt or .md.

The one or more buttons of user interface 300 may be extended. For example, an "artifacts" button could be added to enable users to save one or more scripts (e.g., Python scripts) generated by an LLM backend during a response generation process. In addition to the list of queries and responses, the chatbot tool window of user interface 300 might support multiple chats in parallel, show a "start screen" for new conversations, report errors and connection status, and/or optionally persist chat histories between restarts. This setup of user interface 300 could enhance user interaction by allowing them to manage multiple conversations and maintain continuity across sessions. In some examples, a list of documents or "document" button may be included that indicates or otherwise shows sources of documents or information (e.g., links or other references or identifiers) that are used to generate an answer.

Supporting multiple chats in user interface 300, each with its own chat history and context, may enable users to ask questions for different reports and topics without overwhelming the LLM with excessive contextual information. A "start" or "default" screen of a user interface 300 could be used to provide basic information to the user, such as a link to the chatbot's documentation, basic explanations, and/or suggestions for initial user prompts. User interface 300 may also include information on how to select and/or change the focused report(s). Additionally, users may have a clear indication in user interface 300 of whether a connection to an LLM backend is available and be informed if a backend encounters an error or times out. Persisting chat histories of user interface 300 between restarts (e.g., reloads) may be a feature when using an application in combination with one or more projects. This functionality in user interface 300 may enable users to retrieve the previous state of their analysis and look up information they have queried from the chatbot before. In at least one embodiment, user interface 300 is and/or otherwise includes user interface 408. It should be noted that FIG. 3 is an illustrative example of one or more queries that may be provided through a user interface, and queries may be any suitable queries such as those described herein, such as those relating to profile reports, analysis, optimization, and/or variations thereof.

In at least one embodiment, system using user interface 300 includes one or more processors to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system using user interface 300 is, is included in, and/or otherwise includes systems illustrated in FIGS. 1-10 to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system using user interface 300 performs one or more processes illustrated in FIGS. 1-10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, system using user interface 300 includes one or more hardware illustrated in FIGS. 8A - 10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

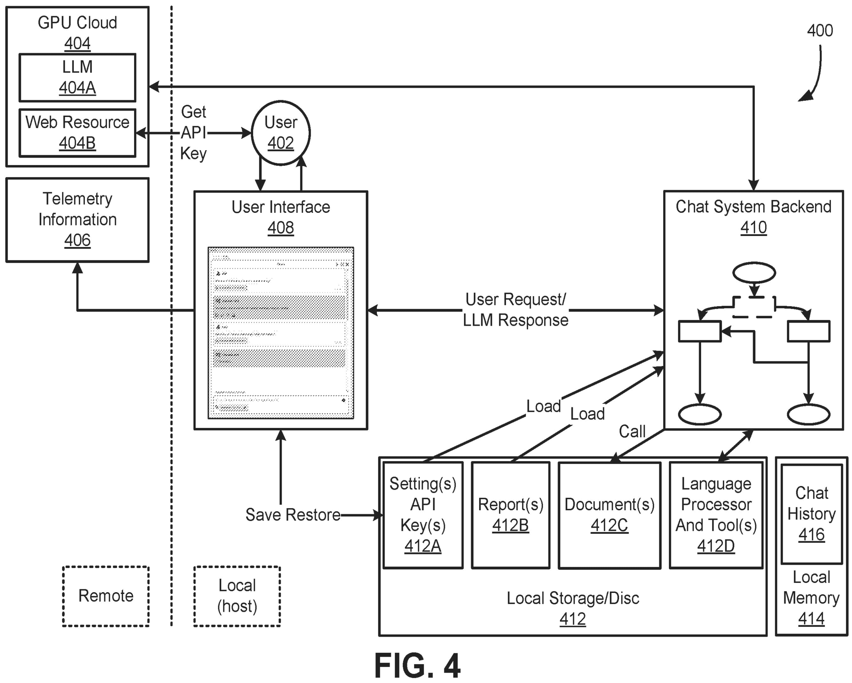

With reference to FIG. 4, FIG. 4 is an example system 400 to generate one or more responses using an LLM, in accordance with some embodiments of the present disclosure. It should be understood that this and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out using one or more processors executing instructions stored in one or more memories. For example, in some embodiments, the system and methods described herein may be implemented using one or more generative language models (e.g., as described in FIGS. 8A-8C), one or more computing devices or components thereof (e.g., as described in FIG. 9), and/or one or more data centers or components thereof (e.g., as described in FIG. 10).

FIG. 4 is a block diagram of a system 400 using one or more neural networks to perform information retrieval, in accordance with at least one embodiment. System 400 may include one or more users 402, one or more user interfaces 408, one or more GPU clouds 404, one or more LLMs 404A stored in GPU cloud (e.g., remote memory), one or more web resources 404B stored in GPU cloud (e.g., remote memory), telemetry information 406 stored in remote memory, one or more user interfaces 408, one or more chat system backends 410 (e.g., system 200, see FIG. 2), local storage and/or disc 412 (e.g., one or more settings API keys 412A, one or more reports 412B, one or more documents 412C, and/or one or more language processors and/or other tools 412D), local memory 414 (e.g., chat history 416), components described herein, and/or combinations thereof. In at least one embodiment, chat system backend 410 is or otherwise includes system 200 (see FIG. 2). In at least one embodiment, user interface 408 is or otherwise includes user interface 300 (see FIG. 3).

System 400 may include one or more backend applications to implement - for example and without limitation, a business logic chat bot. System 400 may implement a network of one or more LLM agents that collaborate on providing answers to user questions by retrieving one or more reports and architecture-specific information from documentation and profile result-specific information. System 400 may utilize various libraries, such as one or more libraries oriented towards natural language processing (e.g., LangChain and/or LangGraph), which may simplify LLM invocation, prompt constructions, tool calling, and/or RAG implementation. System 400 may also include an LLM architecture to communicate with inference microservices remotely using a library such as a natural language processing library (e.g., the langchain-nvidia-ai-endpoints library, or any suitable library) and with a frontend locally via one or more interfaces (e.g., gRPC), representing a server side of a latter communication.

User 402 may ask one or more questions related to a specific profile result and/or general questions about a compute unit, architecture, and/or hardware, and provide the one or more questions through the user interface 408, such as through text or audio input. A user 402 may include a profile result as context in their prompt. A valid user 402 request could include a question or prompt, as well as an optional profile result. If no profile result is included, requests may be treated as general or "non-report related" questions and routed to a general report agent. However, if a profile result is included, users 402 might still ask non-report related questions. To handle this case, a question may initially be considered "report-related" and will proceed to a non-report related subgraph of the LLM network (e.g., chat system backend 410) if no answer is found in a first step.

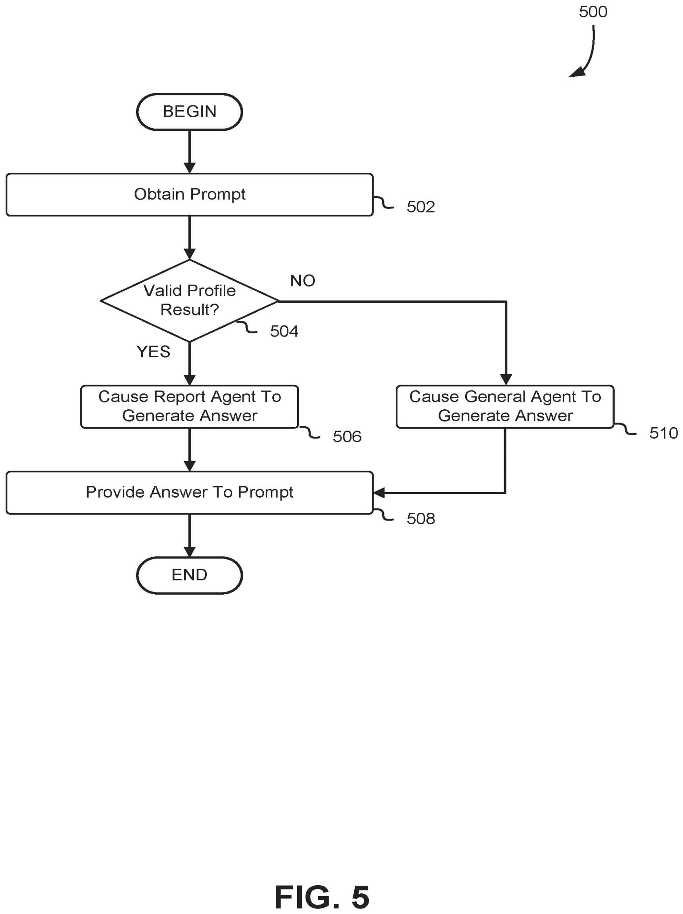

System 400 may include in local (e.g., host) memory one or more local storages, discs 412, and/or local memory 414. In at least one embodiment, local storage and/or disc 412 storage includes one or more settings API keys 412A (e.g., of one or more APIs and libraries such as described herein), one or more reports 412B (e.g., profile reports such as described herein), one or more documents 412C (e.g., programming model documents), and/or one or more tools 412D (e.g., language processor 114, occupancy calculator 112, mathematics tool 116, developer forum search tool 210, and/or profiler 108). In at least one embodiment, local memory includes chat history. Remote memory may include GPU cloud, such as to store one or more LLMs and/or web resources, such as API keys or other information associated with one or more APIs or libraries. Remote memory may include telemetry information. In at least one embodiment, system 400 performs one or more methods 500, 600, and/or 700 (see FIGS. 5-7).

Now referring to FIG. 5, each block of method 500, described herein, comprises a computing process that may be performed using any combination of hardware, firmware, and/or software. For instance, various functions may be carried out using one or more processors executing instructions stored in one or more memories. The method may also be embodied as computer-usable instructions stored on computer storage media. The method may be provided by a standalone application, a service or hosted service (standalone or in combination with another hosted service), as a microservice via an application programming interface (API) or a plug-in to another product, to name a few. In addition, method 500 is described, by way of example, with respect to the system of FIGS. 1 - 4. However, this method may additionally or alternatively be executed by any one system, or any combination of systems, including, but not limited to, those described herein.

FIG. 5 is a flow diagram showing a method 500 to provide one or more answers to a prompt, in accordance with at least one embodiment. The method 500, at block 502, includes to obtain one or more prompts (e.g., queries). A method 500 may begin when invoked by one or more processors.

Block 502 to obtain a prompt may include generating or receiving from a user a prompt for an LLM-based agent to address one or more user queries. The prompt may include one or more user questions related to a compute profiler, architecture programming, and/or specific profile results. To obtain one or more prompts, in block 502, a system may receive one or more inputs via a user interface 300. The user may provide the one or more prompts through text or audio input. The one or more prompts may indicate at least one or more user queries, such as relating to performance of one or more programs by one or more GPUs (e.g., queries relating to specific performance metrics, measurements, optimizations, and/or variations thereof).

Method 500 may include decision block 504. At decision block 504, a decision may be "YES," if there is a valid profile result, otherwise may be "NO." If a decision at decision block 504 is "NO," a system performing method 500 may proceed to block 510. A system performing method 500 may determine that there is a valid profile result based on the prompt. An illustrative example, if the prompt indicates queries relating to one or more programs that have been performed by one or more GPUs, in which performance of the one or more programs has been monitored or otherwise processed by GPU performance monitoring/optimization software to generate a profile report and the queries specifically pertain to some aspect, measurement, or result of the profile report, the system may determine that there is a valid profile result. If a decision at decision block 504 is "YES," a system performing method 500 may proceed to block 506.

Method 500, at block 506, includes causing a report agent 214 to generate one or more answers (e.g., answer output 220, see FIG. 2). The one or more generated answers may then be provided, at block 508, to a user and/or one or more LLMs. Method 500, at block 508, includes providing one or more answers to a prompt. The one or more generated answers may be provided to the user through a user interface such as described herein. Method 500, at block 510, includes causing a general agent 206 to generate one or more answers (e.g., answer output 212, see FIG. 2). A system performing method 500, upon performing block 510 to cause a general agent to generate an answer, may proceed to block 508. In at least one embodiment, method 500 may include one or more agents (e.g., report agent 214 and/or general agent 206) to access one or more web-based resources to generate the one or more responses. A system, upon providing an answer to a prompt, at block 508, may proceed to perform one or more operations herein and/or end.

In at least one embodiment, one or more processors use method 500, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, as an example, a machine readable medium (e.g., non-transitory) having stored thereon a set of instructions, which if performed by one or more processors, cause one or more processors to perform method 500, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

In at least one embodiment, method 500 is, is included in, and/or otherwise includes processes illustrated in FIGS. 1-10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, one or more systems illustrated in FIGS. 1-10 perform method 500, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, one or more hardware illustrated in FIGS. 8A - 10 use method 500, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise performs operations described herein.

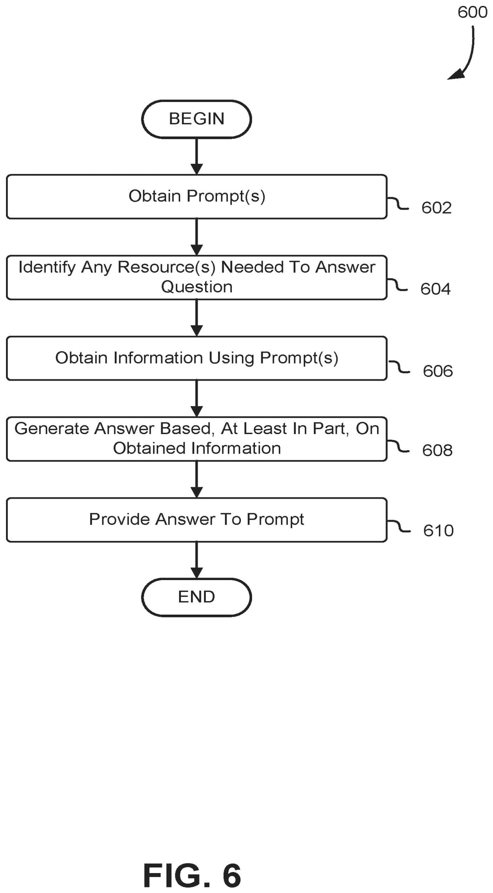

Now referring to FIG. 6, each block of method 600, described herein, comprises a computing process that may be performed using any combination of hardware, firmware, and/or software. For instance, various functions may be carried out using one or more processors executing instructions stored in one or more memories. The method may also be embodied as computer-usable instructions stored on computer storage media. The method may be provided by a standalone application, a service or hosted service (standalone or in combination with another hosted service), as a microservice via an application programming interface (API) or a plug-in to another product, to name a few. In addition, method 600 is described, by way of example, with respect to the system of FIGS. 1 - 5. However, this method may additionally or alternatively be executed by any one system, or any combination of systems, including, but not limited to, those described herein.

FIG. 6 is a flow diagram showing a method 600 to use a general agent to provide one or more answers, in accordance with at least one embodiment. The method 600, at block 602, includes obtaining one or more prompts (e.g., queries). A method 600 may begin when invoked by one or more processors.

Block 602 to obtain a prompt may include generating or receiving from a user a prompt for an LLM-based agent to address one or more user queries. The prompt may include one or more user questions related to a compute profiler, architecture programming, and/or specific profile results. To obtain one or more prompts, in block 602, a system may receive one or more inputs via a user interface 300. The prompt may guide the LLM in generating a response, potentially incorporating insights from various analytical tools 210, such as developer forum search. As an example, at block 602, obtained prompts may not include profile results and are routed (e.g., by a router 204) to general agent 206, such as by using method 500.

Method 600, at block 604, includes identifying any resources needed to answer one or more questions, such as using one or more classifications and/or embeddings of a user input. As an example, at block 604, a general agent may adjust one or more prompts and/or obtain any API information needed to access information identified. A system performing method 600 may identify any documents, guides, resources, or information that may be needed to answer the one or more questions. A system performing method 600 may then proceed to obtain information using one or more prompts, at block 606.

Method 600, at block 606, includes obtaining information using one or more prompts. Information may include information retrieved from one or more vector stores 208, such as processor profiler documents and/or programming guides. A system performing method 600 may perform one or more RAG processes in connection with identified documents, guides, resources, or information to obtain the information to answer the one or more questions. A system performing method 600 may then proceed to generate an answer based, at least in part, on obtained information, at block 608.

Method 600, at block 608, includes generating an answer based, at least in part, on obtained information. To generate an answer based, at least in part, on obtained information, at block 608, a system may utilize a network of LLM agents that collaborate to process user queries. This process, at block 608, may include causing the one or more LLMs to retrieve, process, and/or integrate pertinent data to construct a coherent response. The output, at block 608, may include a detailed answer to the user's query, potentially accompanied by additional resources like scripts or links to relevant forum posts, thereby providing comprehensive insights into performance analysis and/or optimization. A system performing method 600 may then proceed to provide an answer to a prompt, at block 610.

Method 600, at block 610, includes providing an answer to a prompt. In at least one embodiment, at block 610, an answer is provided to one or more LLMs, a user, and/or a user interface 300. Upon providing an answer to a prompt, at block 610, a system performing method 600 may proceed to perform one or more operations described herein and/or end.

In at least one embodiment, one or more processors use method 600, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, as an example, a machine readable medium (e.g., non-transitory) having stored thereon a set of instructions, which if performed by one or more processors, cause one or more processors to perform method 600, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

In at least one embodiment, method 600 is, is included in, and/or otherwise includes processes illustrated in FIGS. 1-10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, one or more systems illustrated in FIGS. 1-10 perform method 600, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, one or more hardware illustrated in FIGS. 8A - 10 use method 600, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise performs operations described herein.

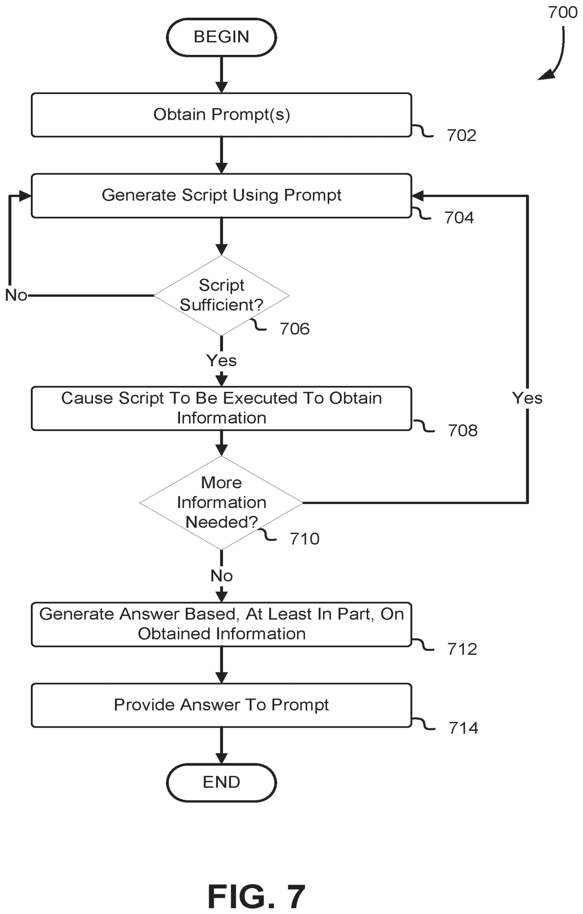

Now referring to FIG. 7, each block of method 700, described herein, comprises a computing process that may be performed using any combination of hardware, firmware, and/or software. For instance, various functions may be carried out using one or more processors executing instructions stored in one or more memories. The method may also be embodied as computer-usable instructions stored on computer storage media. The method may be provided by a standalone application, a service or hosted service (standalone or in combination with another hosted service), as a microservice via an application programming interface (API) or a plug-in to another product, to name a few. In addition, method 700 is described, by way of example, with respect to the system of FIGS. 1 - 6. However, this method may additionally or alternatively be executed by any one system, or any combination of systems, including, but not limited to, those described herein.

FIG. 7 is a flow diagram showing a method 700 to use a report agent to provide one or more answers, in accordance with at least one embodiment. The method 700 and the method 600 may be used or otherwise performed in combination to generate one or more answers to one or more user queries. A system may perform one or more processes of the method 600 and the method 700, in any suitable order, to generate one or more answers to one or more user queries. The method 700, at block 702, includes obtaining one or more prompts (e.g., queries). A method 700 may begin when invoked by one or more processors.

Block 702 to obtain a prompt may include generating or receiving from a user a prompt for an LLM-based agent to address one or more user queries. The prompt may include one or more user questions or queries related to a compute profiler, architecture programming, and/or specific profile results. To obtain one or more prompts, in block 702, a system may receive one or more inputs via a user interface 300. The prompt may guide the LLM in generating a response, potentially incorporating insights from various analytical tools 218, such as language processor and/or occupancy calculator. The prompt may be a request for or analysis of information associated with GPU resource usage information of one or more programs performed by one or more GPUs. As an example, at block 702, obtained prompts may include profile results and be routed (e.g., by a router 204) to report agent 214, such as by using method 500.

Method 700, at block 704, includes generating a script using a prompt. To generate a script using a prompt, at block 704, a system may employ an LLM-based agent that interprets the user's query and constructs a script (e.g., Python script and/or other programming language) to extract relevant data from a profile report. This process may begin with the user providing a prompt that includes specific questions relating to one or more programs (e.g., kernels) performed by one or more GPUs, such as questions relating to the performance of the one or more programs, hardware and/or software (e.g., resource usage) measurements of the one or more GPUs as part of performing the one or more programs, and/or any suitable questions relating to the performance of the one or more programs. The system may identify specific performance information that may be required to answer the specific questions. As an illustrative example, if the user provides questions relating to latency measurements, the system may identify that latency measurements must be obtained to answer the questions. The system may have access to profile reports generated by software that may be monitoring performance of the one or more programs by the one or more GPUs.

The system at block 704, may then utilize the Python Report Interface (PRI), or any suitable interface, to write and execute scripts that gather the specific performance information from the report to answer the specific questions. The system may use one or more neural networks such as those described herein to generate computer program code that, when performed, obtains GPU resource usage information (e.g., information of a profile report or performance report) from one or more performance reports generated by GPU performance software. The script may be any suitable computer program code, such as a Python script, that when performed, based on a profile report, extracts and processes particular information indicated by the user's query, enabling the system to provide detailed responses or optimization advice based on the extracted information. A system performing method 700 may then proceed to cause a script to be executed. The system may generate the script such that the script can be utilized to extract or otherwise obtain the performance information, such as from one or more profile reports.

Method 700, at block 706, includes determining whether the script is sufficient, which may refer to determining whether the script is generated such that no errors are encountered when executing the script or the correct information is obtained as part of executing the script. If there are any runtime errors or errors with execution of the script, a system (e.g., agent) may modify, fix, or otherwise regenerate the script. If there are any errors with the script or the script is otherwise insufficient to be used to obtain information to generate an answer to the prompt, a system performing method 700 may proceed to block 704 to regenerate the script. One or more processors may perform or otherwise cause the script to be performed, in which the script may cause the one or more processors to parse or otherwise extract the performance information from one or more profile reports. In an embodiment, the agent may continuously generate the script and cause the script to be executed until the script can be executed without any runtime errors or otherwise can be executed to obtain the indicated information. Information may also be retrieved from one or more vector stores or any suitable databases or information sources. A system performing method 700 may cause the script to be executed to obtain information at block 708. The system may cause one or more processors to perform or otherwise execute the script. The script may cause the one or more processors to parse or otherwise extract information from one or more performance reports (e.g., generated by GPU performance software) to obtain GPU resource usage information of the one or more programs performed by the one or more GPUs.

Method 700, at block 710, includes determining whether more information is needed. A system performing method 700 may determine whether the obtained information is sufficient to generate an answer to the prompt. The system may determine whether the answer to the prompt can be generated based on the obtained information or if more information is needed to generate the answer to the prompt. The system may determine whether additional scripts are required to further process the obtained information or use the obtained information to obtain additional information. If more information is needed, the system may proceed to block 704 to generate another script that may be utilized to obtain the additional information or otherwise utilize the obtained information to obtain or otherwise generate additional information. Method 700, at block 712, includes generating an answer based, at least in part, on obtained information. To generate an answer based, at least in part, on obtained information, at block 712, a system may utilize a network of LLM agents that collaborate to process user queries. This process, at block 712, might include employing retrieval-augmented generation (RAG) techniques, where the one or more LLMs fetch and integrate pertinent data to construct a coherent response. The output, at block 712, may include a detailed answer to the user's query, potentially accompanied by additional resources like scripts or links to relevant forum posts, thereby providing comprehensive insights into performance analysis and/or optimization. A system performing method 700 may then proceed to provide an answer to a prompt, at block 714.

Method 700, at block 714, includes providing an answer to a prompt. In at least one embodiment, at block 714, an answer is provided to one or more LLMs, a user, and/or a user interface 300. The answer may be provided to one or more users through a user interface such as those described herein. Upon providing an answer to a prompt, at block 714, a system performing method 700 may proceed to perform one or more operations described herein and/or end.

In at least one embodiment, one or more processors use method 700, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, as an example, a machine readable medium (e.g., non-transitory) having stored thereon a set of instructions, which if performed by one or more processors, cause one or more processors to perform method 700, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

In at least one embodiment, method 700 is, is included in, and/or otherwise includes processes illustrated in FIGS. 1-10, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein.

In at least one embodiment, one or more systems illustrated in FIGS. 1-10 perform method 700, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise perform operations described herein. In at least one embodiment, one or more hardware illustrated in FIGS. 8A - 10 use method 700, such as to use one or more neural networks to generate computer program code to obtain performance information of one or more programs performed by one or more graphics processing units (GPUs) based, at least in part, on one or more user queries indicating the one or more programs; perform the computer program code to generate one or more responses to the one or more user queries; and/or otherwise performs operations described herein.

The systems and methods described herein may be used for a variety of purposes, by way of example and without limitation, for machine (e.g., robot, vehicle, construction machinery, warehouse vehicles/machines, autonomous, semi-autonomous, and/or other machine types) control, machine locomotion, machine driving, synthetic data generation, model training (e.g., using real, augmented, and/or synthetic data, such as synthetic data generated using a simulation platform or system, synthetic data generation techniques such as but not limited to those described herein, etc.), perception, augmented reality (AR), virtual reality (VR), mixed reality (MR), robotics, security and surveillance (e.g., in a smart cities implementation), autonomous or semi-autonomous machine applications, deep learning, environment simulation, object or actor simulation and/or digital twinning, data center processing, conversational AI, light transport simulation (e.g., ray-tracing, path tracing, etc.), distributed or collaborative content creation for 3D assets (e.g., using universal scene descriptor (USD) data, such as OpenUSD, and/or other data types), cloud computing, generative artificial intelligence (e.g., using one or more diffusion models, transformer models, etc.), and/or any other suitable applications.

Disclosed embodiments may be comprised in a variety of different systems such as automotive systems (e.g., a control system for an autonomous or semi-autonomous machine, a perception system for an autonomous or semi-autonomous machine), systems implemented using a robot or robotic platform, aerial systems, medial systems, boating systems, smart area monitoring systems, systems for performing deep learning operations, systems for performing simulation operations (e.g., in a driving or vehicle simulation, in a robotics simulation, in a smart cities or surveillance simulation, etc.), systems for performing digital twin operations (e.g., in conjunction with a collaborative content creation platform or system, such as, without limitation, NVIDIA's OMNIVERSE and/or another platform, system, or service that uses USD or OpenUSD data types), systems implemented using an edge device, systems incorporating one or more virtual machines (VMs), systems for performing synthetic data generation operations (e.g., using one or more neural rendering fields (NERFs), gaussian splat techniques, diffusion models, transformer models, etc.), systems implemented at least partially in a data center, systems for performing conversational AI operations, systems implementing one or more language models - such as one or more large language models (LLMs), one or more vision language models (VLMs), one or more multi-modal language models, etc., systems for performing light transport simulation, systems for performing collaborative content creation for 3D assets (e.g., using universal scene descriptor (USD) data, such as OpenUSD, computer aided design (CAD) data, 2D and/or 3D graphics or design data, and/or other data types), systems implemented at least partially using cloud computing resources, and/or other types of systems.

### EXAMPLE LANGUAGE MODELS

In at least some embodiments, language models, such as large language models (LLMs), vision language models (VLMs), multi-modal language models (MMLMs), and/or other types of generative artificial intelligence (AI) may be implemented. As an illustrative example, system 100, 200, and/or 400 may implement language models as part of one or more agents. These models may be capable of understanding, summarizing, translating, and/or otherwise generating text (e.g., natural language text, code, etc.), images, video, computer aided design (CAD) assets, OMNIVERSE and/or METAVERSE file information (e.g., in USD format, such as OpenUSD), and/or the like, based on the context provided in input prompts or queries. These language models may be considered "large," in embodiments, based on the models being trained on massive datasets and having architectures with large number of learnable network parameters (weights and biases) - such as millions or billions of parameters. The LLMs/VLMs/MMLMs/etc. may be implemented for summarizing textual data, analyzing and extracting insights from data (e.g., textual, image, video, etc.), and generating new text/image/video/etc. in user-specified styles, tones, and/or formats. The LLMs/VLMs/MMLMs/etc. of the present disclosure may be used exclusively for text processing, in embodiments, whereas in other embodiments, multi-modal LLMs may be implemented to accept, understand, and/or generate text and/or other types of content like images, audio, 2D and/or 3D data (e.g., in USD formats), and/or video. For example, vision language models (VLMs), or more generally multi-modal language models (MMLMs), may be implemented to accept image, video, audio, textual, 3D design (e.g., CAD), and/or other inputs data types and/or to generate or output image, video, audio, textual, 3D design, and/or other output data types.

Various types of LLMs/VLMs/MMLMs/etc. architectures may be implemented in various embodiments. For example, different architectures may be implemented that use different techniques for understanding and generating outputs - such as text, audio, video, image, 2D and/or 3D design or asset data, etc. In some embodiments, LLMs/VLMs/MMLMs/etc. architectures such as recurrent neural networks (RNNs) or long short-term memory networks (LSTMs) may be used, while in other embodiments transformer architectures - such as those that rely on self-attention and/or cross-attention (e.g., between contextual data and textual data) mechanisms - may be used to understand and recognize relationships between words or tokens and/or contextual data (e.g., other text, video, image, design data, USD, etc.). One or more generative processing pipelines that include LLMs/VLMs/MMLMs/etc. may also include one or more diffusion block(s) (e.g., denoisers). The LLMs/VLMs/MMLMs/etc. of the present disclosure may include encoder and/or decoder block(s). For example, discriminative or encoder-only models like BERT (Bidirectional Encoder Representations from Transformers) may be implemented for tasks that involve language comprehension such as classification, sentiment analysis, question answering, and named entity recognition. As another example, generative or decoder-only models like GPT (Generative Pretrained Transformer) may be implemented for tasks that involve language and content generation such as text completion, story generation, and dialogue generation. LLMs/VLMs/MMLMs/etc. that include both encoder and decoder components like T5 (Text-to-Text Transformer) may be implemented to understand and generate content, such as for translation and summarization. These examples are not intended to be limiting, and any architecture type - including but not limited to those described herein - may be implemented depending on the particular embodiment and the task(s) being performed using the LLMs/VLMs/MMLMs/etc.

In various embodiments, the LLMs/VLMs/MMLMs/etc. may be trained using unsupervised learning, in which an LLMs/VLMs/MMLMs/etc. learns patterns from large amounts of unlabeled text/audio/video/image/design/USD/etc. data. Due to the extensive training, in embodiments, the models may not require task-specific or domain-specific training. LLMs/VLMs/MMLMs/etc. that have undergone extensive pre-training on vast amounts of unlabeled data may be referred to as foundation models and may be adept at a variety of tasks like question-answering, summarization, filling in missing information, translation, image/video/design/USD/data generation. Some LLMs/VLMs/MMLMs/etc. may be tailored for a specific use case using techniques like prompt tuning, fine-tuning, retrieval augmented generation (RAG), adding adapters (e.g., customized neural networks, and/or neural network layers, that tune or adjust prompts or tokens to bias the language model toward a particular task or domain), and/or using other fine-tuning or tailoring techniques that optimize the models for use on particular tasks and/or within particular domains.

In some embodiments, the LLMs/VLMs/MMLMs/etc. of the present disclosure may be implemented using various model alignment techniques. For example, in some embodiments, guardrails may be implemented to identify improper or undesired inputs (e.g., prompts) and/or outputs of the models. In doing so, the system may use the guardrails and/or other model alignment techniques to either prevent a particular undesired input from being processed using the LLMs/VLMs/MMLMs/etc., and/or preventing the output or presentation (e.g., display, audio output, etc.) of information generating using the LLMs/VLMs/MMLMs/etc. In some embodiments, one or more additional models - or layers thereof - may be implemented to identify issues with inputs and/or outputs of the models. For example, these "safeguard" models may be trained to identify inputs and/or outputs that are "safe" or otherwise okay or desired and/or that are "unsafe" or are otherwise undesired for the particular application/implementation. As a result, the LLMs/VLMs/MMLMs/etc., of the present disclosure may be less likely to output language/text/audio/video/design data/USD data/etc. that may be offensive, vulgar, improper, unsafe, out of domain, and/or otherwise undesired for the particular application/implementation.

In some embodiments, the LLMs/VLMs/etc. may be configured to or capable of accessing or using one or more plug-ins, application programming interfaces (APIs), databases, data stores, repositories, etc. For example, for certain tasks or operations that the model is not ideally suited for, the model may have instructions (e.g., as a result of training, and/or based on instructions in a given prompt) to access one or more plug-ins (e.g., 3^{rd} party plugins) for help in processing the current input. In such an example, where at least part of a prompt is related to restaurants or weather, the model may access one or more restaurant or weather plug-ins (e.g., via one or more APIs) to retrieve the relevant information. As another example, where at least part of a response requires a mathematical computation, the model may access one or more math plug-ins or APIs for help in solving the problem(s), and may then use the response from the plug-in and/or API in the output from the model. This process may be repeated - e.g., recursively - for any number of iterations and using any number of plug-ins and/or APIs until a response to the input prompt can be generated that addresses each ask/question/request/process/operation/etc. As such, the model(s) may not only rely on its own knowledge from training on a large dataset(s), but also on the expertise or optimized nature of one or more external resources - such as APIs, plug-ins, and/or the like.

In some embodiments, multiple language models (e.g., LLMs/VLMs/MMLMs/etc., multiple instances of the same language model, and/or multiple prompts provided to the same language model or instance of the same language model may be implemented, executed, or accessed (e.g., using one or more plug-ins, user interfaces, APIs, databases, data stores, repositories, etc.) to provide output responsive to the same query, or responsive to separate portions of a query. In at least one embodiment, multiple language models e.g., language models with different architectures, language models trained on different (e.g. updated) corpuses of data may be provided with the same input query and prompt (e.g., set of constraints, conditioners, etc.). In one or more embodiments, the language models may be different versions of the same foundation model. In one or more embodiments, at least one language model may be instantiated as multiple agents - e.g., more than one prompt may be provided to constrain, direct, or otherwise influence a style, a content, or a character, etc., of the output provided. In one or more example, non-limiting embodiments, the same language model may be asked to provide output corresponding to a different role, perspective, character, or having a different base of knowledge, etc. - as defined by a supplied prompt.

In any one of such embodiments, the output of two or more (e.g., each) language models, two or more versions of at least one language model, two or more instanced agents of at least one language model, and/or two more prompts provided to at least one language model may be further processed, e.g., aggregated, compared or filtered against, or used to determine (and provide) a consensus response. In one or more embodiments, the output from one language model - or version, instance, or agent - maybe be provided as input to another language model for further processing and/or validation. In one or more embodiments, a language model may be asked to generate or otherwise obtain an output with respect to an input source material, with the output being associated with the input source material. Such an association may include, for example, the generation of a caption or portion of text that is embedded (e.g., as metadata) with an input source text or image. In one or more embodiments, an output of a language model may be used to determine the validity of an input source material for further processing, or inclusion in a dataset. For example, a language model may be used to assess the presence (or absence) of a target word in a portion of text or an object in an image, with the text or image being annotated to note such presence (or lack thereof). Alternatively, the determination from the language model may be used to determine whether the source material should be included in a curated dataset, for example and without limitation.

FIG. 8A is a block diagram of an example generative language model system 800 suitable for use in implementing at least some embodiments of the present disclosure, such as those described in connection with FIGS. 1 - 7. As an illustrative example, system 100, 200, and/or 400 may implement or otherwise utilize one or more components and/or processes of the system 800. In the example illustrated in FIG. 8A, the generative language model system 800 includes a retrieval augmented generation (RAG) component 892, an input processor 805, a tokenizer 810, an embedding component 820, plug-ins/APIs 895, and a generative language model (LM) 830 (which may include an LLM, a VLM, a multi-modal LM, etc.).

At a high level, the input processor 805 may receive an input 801 comprising text and/or other types of input data (e.g., audio data, video data, image data, sensor data (e.g., LiDAR, RADAR, ultrasonic, etc.), 3D design data, CAD data, universal scene descriptor (USD) data - such as OpenUSD, etc.), depending on the architecture of the generative LM 830 (e.g., LLM/VLM/MMLM/etc.). In some embodiments, the input 801 includes plain text in the form of one or more sentences, paragraphs, and/or documents. Additionally or alternatively, the input 801 may include numerical sequences, precomputed embeddings (e.g., word or sentence embeddings), and/or structured data (e.g., in tabular formats, JSON, or XML). In some implementations in which the generative LM 830 is capable of processing multi-modal inputs, the input 801 may combine text (or may omit text) with image data, audio data, video data, design data, USD data, and/or other types of input data, such as but not limited to those described herein. Taking raw input text as an example, the input processor 805 may prepare raw input text in various ways. For example, the input processor 805 may perform various types of text filtering to remove noise (e.g., special characters, punctuation, HTML tags, stopwords, portions of an image(s), portions of audio, etc.) from relevant textual content. In an example involving stopwords (common words that tend to carry little semantic meaning), the input processor 805 may remove stopwords to reduce noise and focus the generative LM 830 on more meaningful content. The input processor 805 may apply text normalization, for example, by converting all characters to lowercase, removing accents, and/or or handling special cases like contractions or abbreviations to ensure consistency. These are just a few examples, and other types of input processing may be applied.

In some embodiments, a RAG component 892 (which may include one or more RAG models, and/or may be performed using the generative LM 830 itself) may be used to retrieve additional information to be used as part of the input 801 or prompt. RAG may be used to enhance the input to the LLM/VLM/MMLM/etc. with external knowledge, so that answers to specific questions or queries or requests are more relevant - such as in a case where specific knowledge is required. The RAG component 892 may fetch this additional information (e.g., grounding information, such as grounding text/image/video/audio/USD/CAD/etc.) from one or more external sources, which can then be fed to the LLM/VLM/MMLM/etc. along with the prompt to improve accuracy of the responses or outputs of the model.

For example, in some embodiments, the input 801 may be generated using the query or input to the model (e.g., a question, a request, etc.) in addition to data retrieved using the RAG component 892. In some embodiments, the input processor 805 may analyze the input 801 and communicate with the RAG component 892 (or the RAG component 892 may be part of the input processor 805, in embodiments) in order to identify relevant text and/or other data to provide to the generative LM 830 as additional context or sources of information from which to identify the response, answer, or output 890, generally. For example, where the input indicates that the user is interested in a desired tire pressure for a particular make and model of vehicle, the RAG component 892 may retrieve - using a RAG model performing a vector search in an embedding space, for example - the tire pressure information or the text corresponding thereto from a digital (embedded) version of the user manual for that particular vehicle make and model. Similarly, where a user revisits a chatbot related to a particular product offering or service, the RAG component 892 may retrieve a prior stored conversation history - or at least a summary thereof - and include the prior conversation history along with the current ask/request as part of the input 801 to the generative LM 830.

The RAG component 892 may use various RAG techniques. For example, naïve RAG may be used where documents are indexed, chunked, and applied to an embedding model to generate embeddings corresponding to the chunks. A user query may also be applied to the embedding model and/or another embedding model of the RAG component 892 and the embeddings of the chunks along with the embeddings of the query may be compared to identify the most similar/related embeddings to the query, which may be supplied to the generative LM 830 to generate an output.

In some embodiments, more advanced RAG techniques may be used. For example, prior to passing chunks to the embedding model, the chunks may undergo pre-retrieval processes (e.g., routing, rewriting, metadata analysis, expansion, etc.). In addition, prior to generating the final embeddings, post-retrieval processes (e.g., re-ranking, prompt compression, etc.) may be performed on the outputs of the embedding model prior to final embeddings being used as comparison to an input query.

As a further example, modular RAG techniques may be used, such as those that are similar to naive and/or advanced RAG, but also include features such as hybrid search, recursive retrieval and query engines, StepBack approaches, sub-queries, and hypothetical document embedding.

As another example, Graph RAG may use knowledge graphs as a source of context or factual information. Graph RAG may be implemented using a graph database as a source of contextual information sent to the LLM/VLM/MMLM/etc. Rather than (or in addition to) providing the model with chunks of data extracted from larger sized documents - which may result in a lack of context, factual correctness, language accuracy, etc. - graph RAG may also provide structured entity information to the LLM/VLM/MMLM/etc. by combining the structured entity textual description with its many properties and relationships, allowing for deeper insights by the model. When implementing graph RAG, the systems and methods described herein use a graph as a content store and extract relevant chunks of documents and ask the LLM/VLM/MMLM/etc. to answer using them. The knowledge graph, in such embodiments, may contain relevant textual content and metadata about the knowledge graph as well as be integrated with a vector database. In some embodiments, the graph RAG may use a graph as a subject matter expert, where descriptions of concepts and entities relevant to a query/prompt may be extracted and passed to the model as semantic context. These descriptions may include relationships between the concepts. In other examples, the graph may be used as a database, where part of a query/prompt may be mapped to a graph query, the graph query may be executed, and the LLM/VLM/MMLM/etc. may summarize the results. In such an example, the graph may strore relevant factual information, and a query (natural language query) to graph query tool (NL-to-Graph-query tool) and entity linking may be used. In some embodiments, graph RAG (e.g., using a graph database) may be combined with standard (e.g., vector database) RAG, and/or other RAG types, to benefit from multiple approaches.

In any embodiments, the RAG component 892 may implement a plugin, API, user interface, and/or other functionality to perform RAG. For example, a graph RAG plug-in may be used by the LLM/VLM/MMLM/etc. to run queries against the knowledge graph to extract relevant information for feeding to the model, and a standard or vector RAG plug-in may be used to run queries against a vector database. For example, the graph database may interact with a plug-in's REST interface such that the graph database is decoupled from the vector database and/or the embeddings models.

The tokenizer 810 may segment the (e.g., processed) text data into smaller units (tokens) for subsequent analysis and processing. The tokens may represent individual words, subwords, characters, portions of audio/video/image/etc., depending on the implementation. Word-based tokenization divides the text into individual words, treating each word as a separate token. Subword tokenization breaks down words into smaller meaningful units (e.g., prefixes, suffixes, stems), enabling the generative LM 830 to understand morphological variations and handle out-of-vocabulary words more effectively. Character-based tokenization represents each character as a separate token, enabling the generative LM 830 to process text at a fine-grained level. The choice of tokenization strategy may depend on factors such as the language being processed, the task at hand, and/or characteristics of the training dataset. As such, the tokenizer 810 may convert the (e.g., processed) text into a structured format according to tokenization schema being implemented in the particular embodiment.

The embedding component 820 may use any known embedding technique to transform discrete tokens into (e.g., dense, continuous vector) representations of semantic meaning. For example, the embedding component 820 may use pre-trained word embeddings (e.g., Word2Vec, GloVe, or FastText), one-hot encoding, Term Frequency-Inverse Document Frequency (TF-IDF) encoding, one or more embedding layers of a neural network, and/or otherwise.

In some implementations in which the input 801 includes image data/video data/etc., the input processor 801 may resize the data to a standard size compatible with format of a corresponding input channel and/or may normalize pixel values to a common range (e.g., 0 to 1) to ensure a consistent representation, and the embedding component 820 may encode the image data using any known technique (e.g., using one or more convolutional neural networks (CNNs) to extract visual features). In some implementations in which the input 801 includes audio data, the input processor 801 may resample an audio file to a consistent sampling rate for uniform processing, and the embedding component 820 may use any known technique to extract and encode audio features - such as in the form of a spectrogram (e.g., a mel-spectrogram). In some implementations in which the input 801 includes video data, the input processor 801 may extract frames or apply resizing to extracted frames, and the embedding component 820 may extract features such as optical flow embeddings or video embeddings and/or may encode temporal information or sequences of frames. In some implementations in which the input 801 includes multi-modal data, the embedding component 820 may fuse representations of the different types of data (e.g., text, image, audio, USD, video, design, etc.) using techniques like early fusion (concatenation), late fusion (sequential processing), attention-based fusion (e.g., self-attention, cross-attention), etc.

The generative LM 830 and/or other components of the generative LM system 800 may use different types of neural network architectures depending on the implementation. For example, transformer-based architectures such as those used in models like GPT may be implemented, and may include self-attention mechanisms that weigh the importance of different words or tokens in the input sequence and/or feedforward networks that process the output of the self-attention layers, applying non-linear transformations to the input representations and extracting higher-level features. Some non-limiting example architectures include transformers (e.g., encoder-decoder, decoder only, multi-modal), RNNs, LSTMs, fusion models, diffusion models, cross-modal embedding models that learn joint embedding spaces, graph neural networks (GNNs), hybrid architectures combining different types of architectures adversarial networks like generative adversarial networks or GANs or adversarial autoencoders (AAEs) for joint distribution learning, and others. As such, depending on the implementation and architecture, the embedding component 820 may apply an encoded representation of the input 801 to the generative LM 830, and the generative LM 830 may process the encoded representation of the input 801 to generate an output 890, which may include responsive text and/or other types of data.

As described herein, in some embodiments, the generative LM 830 may be configured to access or use - or capable of accessing or using - plug-ins/APIs 895 (which may include one or more plug-ins, application programming interfaces (APIs), databases, data stores, repositories, etc.). For example, for certain tasks or operations that the generative LM 830 is not ideally suited for, the model may have instructions (e.g., as a result of training, and/or based on instructions in a given prompt, such as those retrieved using the RAG component 892) to access one or more plug-ins/APIs 895 (e.g., 3^{rd} party plugins) for help in processing the current input. In such an example, where at least part of a prompt is related to restaurants or weather, the model may access one or more restaurant or weather plug-ins (e.g., via one or more APIs), send at least a portion of the prompt related to the particular plug-in/API 895 to the plug-in/API 895, the plug-in/API 895 may process the information and return an answer to the generative LM 830, and the generative LM 830 may use the response to generate the output 890. This process may be repeated - e.g., recursively - for any number of iterations and using any number of plug-ins/APIs 895 until an output 890 that addresses each ask/question/request/process/operation/etc. from the input 801 can be generated. As such, the model(s) may not only rely on its own knowledge from training on a large dataset(s) and/or from data retrieved using the RAG component 892, but also on the expertise or optimized nature of one or more external resources - such as the plug-ins/APIs 895.

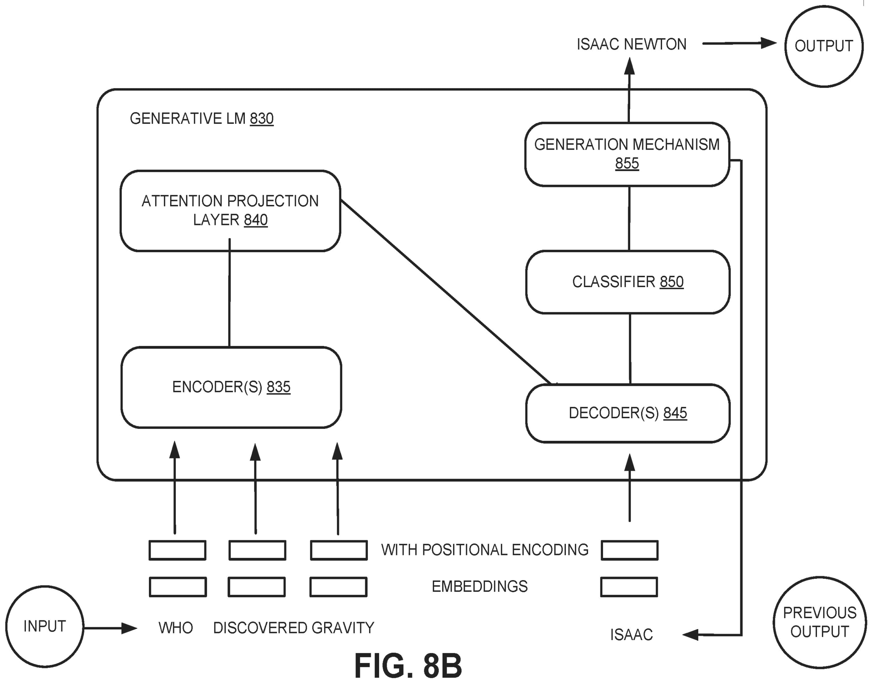

FIG. 8B is a block diagram of an example implementation in which the generative LM 830 includes a transformer encoder-decoder. For example, assume input text such as "Who discovered gravity" is tokenized (e.g., by the tokenizer810 of FIG. 8A) into tokens such as words, and each token is encoded (e.g., by the embedding component 820 of FIG. 98A) into a corresponding embedding (e.g., of size 512). Since these token embeddings typically do not represent the position of the token in the input sequence, any known technique may be used to add a positional encoding to each token embedding to encode the sequential relationships and context of the tokens in the input sequence. As such, the (e.g., resulting) embeddings may be applied to one or more encoder(s) 835 of the generative LM 830.

In an example implementation, the encoder(s) 835 forms an encoder stack, where each encoder includes a self-attention layer and a feedforward network. In an example transformer architecture, each token (e.g., word) flows through a separate path. As such, each encoder may accept a sequence of vectors, passing each vector through the self-attention layer, then the feedforward network, and then upwards to the next encoder in the stack. Any known self-attention technique may be used. For example, to calculate a self-attention score for each token (word), a query vector, a key vector, and a value vector may be created for each token, a self-attention score may be calculated for pairs of tokens by taking the dot product of the query vector with the corresponding key vectors, normalizing the resulting scores, multiplying by corresponding value vectors, and summing weighted value vectors. The encoder may apply multi-headed attention in which the attention mechanism is applied multiple times in parallel with different learned weight matrices. Any number of encoders may be cascaded to generate a context vector encoding the input. An attention projection layer 840 may convert the context vector into attention vectors (keys and values) for the decoder(s) 845.

In an example implementation, the decoder(s) 845 form a decoder stack, where each decoder includes a self-attention layer, an encoder-decoder self-attention layer that uses the attention vectors (keys and values) from the encoder to focus on relevant parts of the input sequence, and a feedforward network. As with the encoder(s) 835, in an example transformer architecture, each token (e.g., word) flows through a separate path in the decoder(s) 845. During a first pass, the decoder(s) 845, a classifier 850, and a generation mechanism 855 may generate a first token, and the generation mechanism 855 may apply the generated token as an input during a second pass. The process may repeat in a loop, successively generating and adding tokens (e.g., words) to the output from the preceding pass and applying the token embeddings of the composite sequence with positional encodings as an input to the decoder(s) 845 during a subsequent pass, sequentially generating one token at a time (known as auto-regression) until predicting a symbol or token that represents the end of the response. Within each decoder, the self-attention layer is typically constrained to attend only to preceding positions in the output sequence by applying a masking technique (e.g., setting future positions to negative infinity) before the softmax operation. In an example implementation, the encoder-decoder attention layer operates similarly to the (e.g., multi-headed) self-attention in the encoder(s) 835, except that it creates its queries from the layer below it and takes the keys and values (e.g., matrix) from the output of the encoder(s) 835.

As such, the decoder(s) 845 may output some decoded (e.g., vector) representation of the input being applied during a particular pass. The classifier 850 may include a multi-class classifier comprising one or more neural network layers that project the decoded (e.g., vector) representation into a corresponding dimensionality (e.g., one dimension for each supported word or token in the output vocabulary) and a softmax operation that converts logits to probabilities. As such, the generation mechanism 855 may select or sample a word or token based on a corresponding predicted probability (e.g., select the word with the highest predicted probability) and append it to the output from a previous pass, generating each word or token sequentially. The generation mechanism 855 may repeat the process, triggering successive decoder inputs and corresponding predictions until selecting or sampling a symbol or token that represents the end of the response, at which point, the generation mechanism 855 may output the generated response.

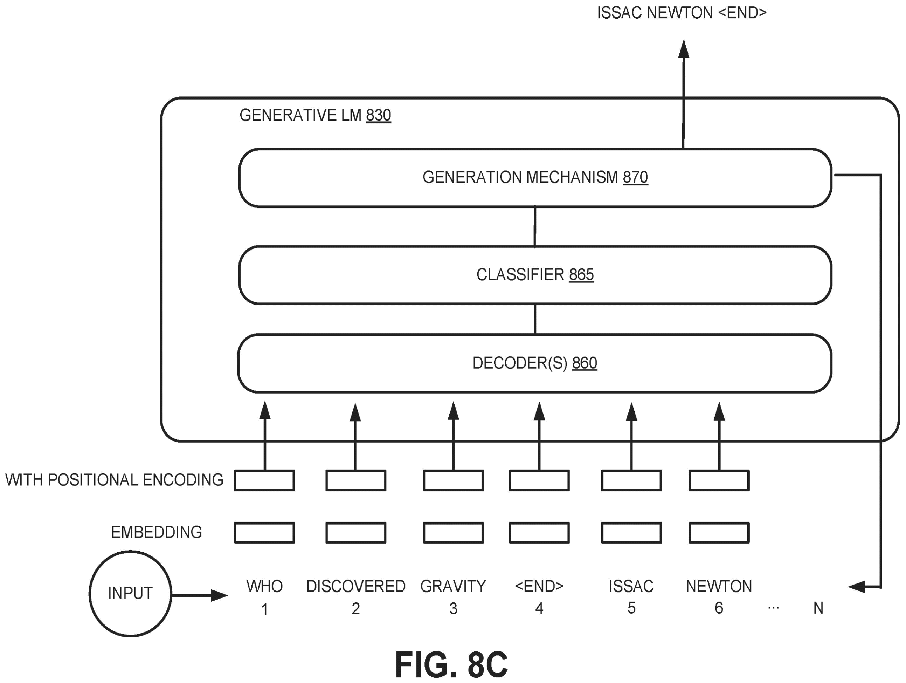

FIG. 8C is a block diagram of an example implementation in which the generative LM 830 includes a decoder-only transformer architecture. For example, the decoder(s) 860 of FIG. 8C may operate similarly as the decoder(s) 845 of FIG. 8B except each of the decoder(s) 860 of FIG. 8C omits the encoder-decoder self-attention layer (since there is no encoder in this implementation). As such, the decoder(s) 860 may form a decoder stack, where each decoder includes a self-attention layer and a feedforward network. Furthermore, instead of encoding the input sequence, a symbol or token representing the end of the input sequence (or the beginning of the output sequence) may be appended to the input sequence, and the resulting sequence (e.g., corresponding embeddings with positional encodings) may be applied to the decoder(s) 860. As with the decoder(s) 845 of FIG. 8B, each token (e.g., word) may flow through a separate path in the decoder(s) 860, and the decoder(s) 860, a classifier 865, and a generation mechanism 870 may use auto-regression to sequentially generate one token at a time until predicting a symbol or token that represents the end of the response. The classifier 865 and the generation mechanism 870 may operate similarly as the classifier 850 and the generation mechanism 855 of FIG. 8B, with the generation mechanism 870 selecting or sampling each successive output token based on a corresponding predicted probability and appending it to the output from a previous pass, generating each token sequentially until selecting or sampling a symbol or token that represents the end of the response. These and other architectures described herein are meant simply as examples, and other suitable architectures may be implemented within the scope of the present disclosure.

### EXAMPLE COMPUTING DEVICE

FIG. 9 is a block diagram of an example computing device(s) 900 suitable for use in implementing some embodiments of the present disclosure, such as those described in connection with FIGS. 1 - 7. As an illustrative example, system 100, 200, and/or 400 may implement or otherwise utilize one or more components and/or processes of the computing device 900. Computing device 900 may include an interconnect system 902 that directly or indirectly couples the following devices: memory 904, one or more central processing units (CPUs) 906, one or more graphics processing units (GPUs) 908, a communication interface 910, input/output (I/O) ports 912, input/output components 914, a power supply 916, one or more presentation components 918 (e.g., display(s)), and one or more logic units 920. In at least one embodiment, the computing device(s) 900 may comprise one or more virtual machines (VMs), and/or any of the components thereof may comprise virtual components (e.g., virtual hardware components). For non-limiting examples, one or more of the GPUs 908 may comprise one or more vGPUs, one or more of the CPUs 906 may comprise one or more vCPUs, and/or one or more of the logic units 920 may comprise one or more virtual logic units. As such, a computing device(s) 900 may include discrete components (e.g., a full GPU dedicated to the computing device 900), virtual components (e.g., a portion of a GPU dedicated to the computing device 900), or a combination thereof.

Although the various blocks of FIG. 9 are shown as connected via the interconnect system 902 with lines, this is not intended to be limiting and is for clarity only. For example, in some embodiments, a presentation component 918, such as a display device, may be considered an I/O component 914 (e.g., if the display is a touch screen). As another example, the CPUs 906 and/or GPUs 908 may include memory (e.g., the memory 904 may be representative of a storage device in addition to the memory of the GPUs 908, the CPUs 906, and/or other components). As such, the computing device of FIG. 9 is merely illustrative. Distinction is not made between such categories as "workstation," "server," "laptop," "desktop," "tablet," "client device," "mobile device," "hand-held device," "game console," "electronic control unit (ECU)," "virtual reality system," and/or other device or system types, as all are contemplated within the scope of the computing device of FIG. 9.

The interconnect system 902 may represent one or more links or busses, such as an address bus, a data bus, a control bus, or a combination thereof. The interconnect system 902 may include one or more bus or link types, such as an industry standard architecture (ISA) bus, an extended industry standard architecture (EISA) bus, a video electronics standards association (VESA) bus, a peripheral component interconnect (PCI) bus, a peripheral component interconnect express (PCIe) bus, and/or another type of bus or link. In some embodiments, there are direct connections between components. As an example, the CPU 906 may be directly connected to the memory 904. Further, the CPU 906 may be directly connected to the GPU 908. Where there is direct, or point-to-point connection between components, the interconnect system 902 may include a PCIe link to carry out the connection. In these examples, a PCI bus need not be included in the computing device 900.

The memory 904 may include any of a variety of computer-readable media. The computer-readable media may be any available media that may be accessed by the computing device 900. The computer-readable media may include both volatile and nonvolatile media, and removable and non-removable media. By way of example, and not limitation, the computer-readable media may comprise computer-storage media and communication media.

The computer-storage media may include both volatile and nonvolatile media and/or removable and non-removable media implemented in any method or technology for storage of information such as computer-readable instructions, data structures, program modules, and/or other data types. For example, the memory 904 may store computer-readable instructions (e.g., that represent a program(s) and/or a program element(s), such as an operating system. Computer-storage media may include, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which may be used to store the desired information and which may be accessed by computing device 900. As used herein, computer storage media does not comprise signals per se.

The computer storage media may embody computer-readable instructions, data structures, program modules, and/or other data types in a modulated data signal such as a carrier wave or other transport mechanism and includes any information delivery media. The term "modulated data signal" may refer to a signal that has one or more of its characteristics set or changed in such a manner as to encode information in the signal. By way of example, and not limitation, the computer storage media may include wired media such as a wired network or direct-wired connection, and wireless media such as acoustic, RF, infrared and other wireless media. Combinations of any of the above should also be included within the scope of computer-readable media.

The CPU(s) 906 may be configured to execute at least some of the computer-readable instructions to control one or more components of the computing device 900 to perform one or more of the methods and/or processes described herein. The CPU(s) 906 may each include one or more cores (e.g., one, two, four, eight, twenty-eight, seventy-two, etc.) that are capable of handling a multitude of software threads simultaneously. The CPU(s) 906 may include any type of processor, and may include different types of processors depending on the type of computing device 900 implemented (e.g., processors with fewer cores for mobile devices and processors with more cores for servers). For example, depending on the type of computing device 900, the processor may be an Advanced RISC Machines (ARM) processor implemented using Reduced Instruction Set Computing (RISC) or an x86 processor implemented using Complex Instruction Set Computing (CISC). The computing device 900 may include one or more CPUs 906 in addition to one or more microprocessors or supplementary co-processors, such as math co-processors.

In addition to or alternatively from the CPU(s) 906, the GPU(s) 908 may be configured to execute at least some of the computer-readable instructions to control one or more components of the computing device 900 to perform one or more of the methods and/or processes described herein. One or more of the GPU(s) 908 may be an integrated GPU (e.g., with one or more of the CPU(s) 906 and/or one or more of the GPU(s) 908 may be a discrete GPU. In embodiments, one or more of the GPU(s) 908 may be a coprocessor of one or more of the CPU(s) 906. The GPU(s) 908 may be used by the computing device 900 to render graphics (e.g., 3D graphics) or perform general purpose computations. For example, the GPU(s) 908 may be used for General-Purpose computing on GPUs (GPGPU). The GPU(s) 908 may include hundreds or thousands of cores that are capable of handling hundreds or thousands of software threads simultaneously. The GPU(s) 908 may generate pixel data for output images in response to rendering commands (e.g., rendering commands from the CPU(s) 906 received via a host interface). The GPU(s) 908 may include graphics memory, such as display memory, for storing pixel data or any other suitable data, such as GPGPU data. The display memory may be included as part of the memory 904. The GPU(s) 908 may include two or more GPUs operating in parallel (e.g., via a link). The link may directly connect the GPUs (e.g., using NVLINK) or may connect the GPUs through a switch (e.g., using NVSwitch). When combined together, each GPU 908 may generate pixel data or GPGPU data for different portions of an output or for different outputs (e.g., a first GPU for a first image and a second GPU for a second image). Each GPU may include its own memory, or may share memory with other GPUs.

In addition to or alternatively from the CPU(s) 906 and/or the GPU(s) 908, the logic unit(s) 920 may be configured to execute at least some of the computer-readable instructions to control one or more components of the computing device 900 to perform one or more of the methods and/or processes described herein. In embodiments, the CPU(s) 906, the GPU(s) 908, and/or the logic unit(s) 920 may discretely or jointly perform any combination of the methods, processes and/or portions thereof. One or more of the logic units 920 may be part of and/or integrated in one or more of the CPU(s) 906 and/or the GPU(s) 908 and/or one or more of the logic units 920 may be discrete components or otherwise external to the CPU(s) 906 and/or the GPU(s) 908. In embodiments, one or more of the logic units 920 may be a coprocessor of one or more of the CPU(s) 906 and/or one or more of the GPU(s) 908.

Examples of the logic unit(s) 920 include one or more processing cores and/or components thereof, such as Data Processing Units (DPUs), Tensor Cores (TCs), Tensor Processing Units (TPUs), Pixel Visual Cores (PVCs), Vision Processing Units (VPUs), Graphics Processing Clusters (GPCs), Texture Processing Clusters (TPCs), Streaming Multiprocessors (SMs), Tree Traversal Units (TTUs), Artificial Intelligence Accelerators (AIAs), Deep Learning Accelerators (DLAs), Programmable Vision Accelerator (PVAs) - which may include one or more direct memory access (DMA) systems, one or more vision or vector processing units (VPUs), one or more pixel processing engines (PPEs) - e.g., including a 2D array of processing elements that each communicate north, south, east, and west with one or more other processing elements in the array, one or more decoupled accelerators or units (e.g., decoupled lookup table (DLUT) accelerators or units), etc., Vision Processing Units (VPUs), Optical Flow Accelerators (OFAs), Field Programmable Gate Arrays (FPGAs), Neuromorphic Chips, Quantum Processing Units (QPUs), Associative Process Units (APUs), Arithmetic-Logic Units (ALUs), Application-Specific Integrated Circuits (ASICs), Floating Point Units (FPUs), input/output (I/O) elements, peripheral component interconnect (PCI) or peripheral component interconnect express (PCIe) elements, and/or the like.

The communication interface 910 may include one or more receivers, transmitters, and/or transceivers that allow the computing device 900 to communicate with other computing devices via an electronic communication network, included wired and/or wireless communications. The communication interface 910 may include components and functionality to allow communication over any of a number of different networks, such as wireless networks (e.g., Wi-Fi, Z-Wave, Bluetooth, Bluetooth LE, ZigBee, etc.), wired networks (e.g., communicating over Ethernet or InfiniBand), low-power wide-area networks (e.g., LoRaWAN, SigFox, etc.), and/or the Internet. In one or more embodiments, logic unit(s) 920 and/or communication interface 910 may include one or more data processing units (DPUs) to transmit data received over a network and/or through interconnect system 902 directly to (e.g., a memory of) one or more GPU(s) 908.

The I/O ports 912 may allow the computing device 900 to be logically coupled to other devices including the I/O components 914, the presentation component(s) 918, and/or other components, some of which may be built in to (e.g., integrated in) the computing device 900. Illustrative I/O components 914 include a microphone, mouse, keyboard, joystick, game pad, game controller, satellite dish, scanner, printer, wireless device, etc. The I/O components 914 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition both on screen and adjacent to the screen, air gestures, head and eye tracking, and touch recognition (as described in more detail below) associated with a display of the computing device 900. The computing device 900 may be include depth cameras, such as stereoscopic camera systems, infrared camera systems, RGB camera systems, touchscreen technology, and combinations of these, for gesture detection and recognition. Additionally, the computing device 900 may include accelerometers or gyroscopes (e.g., as part of an inertia measurement unit (IMU)) that allow detection of motion. In some examples, the output of the accelerometers or gyroscopes may be used by the computing device 900 to render immersive augmented reality or virtual reality.

The power supply 916 may include a hard-wired power supply, a battery power supply, or a combination thereof. The power supply 916 may provide power to the computing device 900 to allow the components of the computing device 900 to operate.

The presentation component(s) 918 may include a display (e.g., a monitor, a touch screen, a television screen, a heads-up-display (HUD), other display types, or a combination thereof), speakers, and/or other presentation components. The presentation component(s) 918 may receive data from other components (e.g., the GPU(s) 908, the CPU(s) 906, DPUs, etc.), and output the data (e.g., as an image, video, sound, etc.).

### EXAMPLE DATA CENTER

FIG. 10 illustrates an example data center 1000 that may be used in at least one embodiments of the present disclosure, such as those described in connection with FIGS. 1 - 7. As an illustrative example, system 100, 200, and/or 400 may implement or otherwise utilize one or more components and/or processes of the data center 1000. The data center 1000 may include a data center infrastructure layer 1010, a framework layer 1020, a software layer 1030, and/or an application layer 1040.

As shown in FIG. 10, the data center infrastructure layer 1010 may include a resource orchestrator 1012, grouped computing resources 1014, and node computing resources ("node C.R.s") 1016(1)-1016(N), where "N" represents any whole, positive integer. In at least one embodiment, node C.R.s 1016(1)-1016(N) may include, but are not limited to, any number of central processing units (CPUs) or other processors (including DPUs, accelerators, field programmable gate arrays (FPGAs), graphics processors or graphics processing units (GPUs), etc.), memory devices (e.g., dynamic read-only memory), storage devices (e.g., solid state or disk drives), network input/output (NW I/O) devices, network switches, virtual machines (VMs), power modules, and/or cooling modules, etc. In some embodiments, one or more node C.R.s from among node C.R.s 1016(1)-1016(N) may correspond to a server having one or more of the above-mentioned computing resources. In addition, in some embodiments, the node C.R.s 1016(1)-10161(N) may include one or more virtual components, such as vGPUs, vCPUs, and/or the like, and/or one or more of the node C.R.s 1016(1)-1016(N) may correspond to a virtual machine (VM).

In at least one embodiment, grouped computing resources 1014 may include separate groupings of node C.R.s 1016 housed within one or more racks (not shown), or many racks housed in data centers at various geographical locations (also not shown). Separate groupings of node C.R.s 1016 within grouped computing resources 1014 may include grouped compute, network, memory or storage resources that may be configured or allocated to support one or more workloads. In at least one embodiment, several node C.R.s 1016 including CPUs, GPUs, DPUs, and/or other processors may be grouped within one or more racks to provide compute resources to support one or more workloads. The one or more racks may also include any number of power modules, cooling modules, and/or network switches, in any combination.

The resource orchestrator 1012 may configure or otherwise control one or more node C.R.s 1016(1)-1016(N) and/or grouped computing resources 1014. In at least one embodiment, resource orchestrator 1012 may include a software design infrastructure (SDI) management entity for the data center 1000. The resource orchestrator 1012 may include hardware, software, or some combination thereof.

In at least one embodiment, as shown in FIG. 10, framework layer 1020 may include a job scheduler 1028, a configuration manager 1034, a resource manager 1036, and/or a distributed file system 1038. The framework layer 1020 may include a framework to support software 1032 of software layer 1030 and/or one or more application(s) 1042 of application layer 1040. The software 1032 or application(s) 1042 may respectively include web-based service software or applications, such as those provided by Amazon Web Services, Google Cloud and Microsoft Azure. The framework layer 1020 may be, but is not limited to, a type of free and open-source software web application framework such as Apache Spark^{™} (hereinafter "Spark") that may use distributed file system 1038 for large-scale data processing (e.g., "big data"). In at least one embodiment, job scheduler 1028 may include a Spark driver to facilitate scheduling of workloads supported by various layers of data center 1000. The configuration manager 1034 may be capable of configuring different layers such as software layer 1030 and framework layer 1020 including Spark and distributed file system 1038 for supporting large-scale data processing. The resource manager 1036 may be capable of managing clustered or grouped computing resources mapped to or allocated for support of distributed file system 1038 and job scheduler 1028. In at least one embodiment, clustered or grouped computing resources may include grouped computing resource 1014 at data center infrastructure layer 1010. The resource manager 1036 may coordinate with resource orchestrator 1012 to manage these mapped or allocated computing resources.

In at least one embodiment, software 1032 included in software layer 1030 may include software used by at least portions of node C.R.s 1016(1)-1016(N), grouped computing resources 1014, and/or distributed file system 1038 of framework layer 1020. One or more types of software may include, but are not limited to, Internet web page search software, e-mail virus scan software, database software, and streaming video content software.

In at least one embodiment, application(s) 1042 included in application layer 1040 may include one or more types of applications used by at least portions of node C.R.s 1016(1)-1016(N), grouped computing resources 1014, and/or distributed file system 1038 of framework layer 1020. One or more types of applications may include, but are not limited to, any number of a genomics application, a cognitive compute, and a machine learning application, including training or inferencing software, machine learning framework software (e.g., PyTorch, TensorFlow, Caffe, etc.), and/or other machine learning applications used in conjunction with one or more embodiments.

In at least one embodiment, any of configuration manager 1034, resource manager 1036, and resource orchestrator 1012 may implement any number and type of self-modifying actions based on any amount and type of data acquired in any technically feasible fashion. Self-modifying actions may relieve a data center operator of data center 1000 from making possibly bad configuration decisions and possibly avoiding underutilized and/or poor performing portions of a data center.

The data center 1000 may include tools, services, software or other resources to train one or more machine learning models or predict or infer information using one or more machine learning models according to one or more embodiments described herein. For example, a machine learning model(s) may be trained by calculating weight parameters according to a neural network architecture using software and/or computing resources described above with respect to the data center 1000. In at least one embodiment, trained or deployed machine learning models corresponding to one or more neural networks may be used to infer or predict information using resources described above with respect to the data center 1000 by using weight parameters calculated through one or more training techniques, such as but not limited to those described herein.

In at least one embodiment, the data center 1000 may use CPUs, application-specific integrated circuits (ASICs), GPUs, FPGAs, and/or other hardware (or virtual compute resources corresponding thereto) to perform training and/or inferencing using above-described resources. Moreover, one or more software and/or hardware resources described above may be configured as a service to allow users to train or performing inferencing of information, such as image recognition, speech recognition, or other artificial intelligence services.

### EXAMPLE NETWORK ENVIRONMENTS

Network environments suitable for use in implementing embodiments of the disclosure may include one or more client devices, servers, network attached storage (NAS), other backend devices, and/or other device types. The client devices, servers, and/or other device types (e.g., each device) may be implemented on one or more instances of the computing device(s) 900 of FIG. 9 - e.g., each device may include similar components, features, and/or functionality of the computing device(s) 900. In addition, where backend devices (e.g., servers, NAS, etc.) are implemented, the backend devices may be included as part of a data center 1000, an example of which is described in more detail herein with respect to FIG. 10.

Components of a network environment may communicate with each other via a network(s), which may be wired, wireless, or both. The network may include multiple networks, or a network of networks. By way of example, the network may include one or more Wide Area Networks (WANs), one or more Local Area Networks (LANs), one or more public networks such as the Internet and/or a public switched telephone network (PSTN), and/or one or more private networks. Where the network includes a wireless telecommunications network, components such as a base station, a communications tower, or even access points (as well as other components) may provide wireless connectivity.

Compatible network environments may include one or more peer-to-peer network environments - in which case a server may not be included in a network environment - and one or more client-server network environments - in which case one or more servers may be included in a network environment. In peer-to-peer network environments, functionality described herein with respect to a server(s) may be implemented on any number of client devices.

In at least one embodiment, a network environment may include one or more cloud-based network environments, a distributed computing environment, a combination thereof, etc. A cloud-based network environment may include a framework layer, a job scheduler, a resource manager, and a distributed file system implemented on one or more of servers, which may include one or more core network servers and/or edge servers. A framework layer may include a framework to support software of a software layer and/or one or more application(s) of an application layer. The software or application(s) may respectively include web-based service software or applications. In embodiments, one or more of the client devices may use the web-based service software or applications (e.g., by accessing the service software and/or applications via one or more application programming interfaces (APIs)). The framework layer may be, but is not limited to, a type of free and open-source software web application framework such as that may use a distributed file system for large-scale data processing (e.g., "big data").

A cloud-based network environment may provide cloud computing and/or cloud storage that carries out any combination of computing and/or data storage functions described herein (or one or more portions thereof). Any of these various functions may be distributed over multiple locations from central or core servers (e.g., of one or more data centers that may be distributed across a state, a region, a country, the globe, etc.). If a connection to a user (e.g., a client device) is relatively close to an edge server(s), a core server(s) may designate at least a portion of the functionality to the edge server(s). A cloud-based network environment may be private (e.g., limited to a single organization), may be public (e.g., available to many organizations), and/or a combination thereof (e.g., a hybrid cloud environment).

The client device(s) may include at least some of the components, features, and functionality of the example computing device(s) 900 described herein with respect to FIG. 9. By way of example and not limitation, a client device may be embodied as a Personal Computer (PC), a laptop computer, a mobile device, a smartphone, a tablet computer, a smart watch, a wearable computer, a Personal Digital Assistant (PDA), an MP3 player, a virtual reality headset, a Global Positioning System (GPS) or device, a video player, a video camera, a surveillance device or system, a vehicle, a boat, a flying vessel, a virtual machine, a drone, a robot, a handheld communications device, a hospital device, a gaming device or system, an entertainment system, a vehicle computer system, an embedded system controller, a remote control, an appliance, a consumer electronic device, a workstation, an edge device, any combination of these delineated devices, or any other suitable device.

The disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The disclosure may be practiced in a variety of system configurations, including hand-held devices, consumer electronics, general-purpose computers, more specialty computing devices, etc. The disclosure may also be practiced in distributed computing environments where tasks are performed by remote-processing devices that are linked through a communications network.

As used herein, a recitation of "and/or" with respect to two or more elements should be interpreted to mean only one element, or a combination of elements. For example, "element A, element B, and/or element C" may include only element A, only element B, only element C, element A and element B, element A and element C, element B and element C, or elements A, B, and C. In addition, "at least one of element A or element B" may include at least one of element A, at least one of element B, or at least one of element A and at least one of element B. Further, "at least one of element A and element B" may include at least one of element A, at least one of element B, or at least one of element A and at least one of element B.

The subject matter of the present disclosure is described with specificity herein to meet statutory requirements. However, the description itself is not intended to limit the scope of this disclosure. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. One or more processors comprising processing circuitry to:
   use one or more neural networks to generate computer program code to obtain performance information of one or more programs performed by one or more graphics processing units (GPUs) based, at least in part, on one or more user queries indicating the one or more programs; and
   execute the computer program code to generate one or more responses to the one or more user queries.
Clause 2. The one or more processors of clause 1, wherein the processing circuitry is to obtain the performance information by executing the computer program code to generate one or more performance reports.
Clause 3. The one or more processors of clause 1, wherein the computer program code includes one or more computer program scripts.
Clause 4. The one or more processors of clause 1, wherein the processing circuitry is to use the one or more neural networks to generate the one or more responses based, at least in part, on the one or more user queries and the performance information.
Clause 5. The one or more processors of clause 1, wherein the one or more programs include one or more compute kernels.
Clause 6. The one or more processors of clause 1, wherein the processing circuitry is to obtain occupancy information associated with the one or more programs to generate the one or more responses.
Clause 7. The one or more processors of clause 1, wherein the one or more neural networks include one or more language models.
Clause 8. The one or more processors of clause 1, wherein the one or more processors are comprised in at least one of:
   a control system for an autonomous or semi-autonomous machine;
   a perception system for an autonomous or semi-autonomous machine;
   a system for performing simulation operations;
   a system for performing digital twin operations;
   a system for performing light transport simulation;
   a system for performing collaborative content creation for 3D assets;
   a system for performing deep learning operations;
   a system for performing remote operations;
   a system for performing real-time streaming;
   a system for generating or presenting one or more of augmented reality content, virtual reality content, or mixed reality content;
   a system implemented using an edge device;
   a system implemented using a robot;
   a system for performing conversational AI operations;
   a system implementing one or more multi-model language models;
   a system implementing one or more large language models (LLMs);
   a system implementing one or more vision language models (VLMs);
   a system for generating synthetic data;
   a system for generating synthetic data using AI;
   a system incorporating one or more virtual machines (VMs);
   a system implemented at least partially in a data center; or
   a system implemented at least partially using cloud computing resources.
Clause 9. A system comprising one or more processors to:
   obtain one or more queries from one or more users indicating at least one or more programs;
   use one or more neural networks to generate computer program code to obtain performance information of one or more graphics processing units (GPUs) used to perform the one or more programs based, at least in part, on the one or more queries; and
   execute the computer program code to generate one or more responses to the one or more queries.
Clause 10. The system of clause 9, wherein the one or more processors are to obtain the performance information based, at least in part, on a profile report generated by software associated with the one or more GPUs.
Clause 11. The system of clause 9, wherein the one or more processors are to generate the one or more responses based, at least in part, on documentation associated with the one or more GPUs.
Clause 12. The system of clause 9, wherein the one or more processors are to perform one or more retrieval augmented generation (RAG) operations to generate the one or more responses.
Clause 13. The system of clause 9, wherein the system is comprised in at least one of:
   a control system for an autonomous or semi-autonomous machine;
   a perception system for an autonomous or semi-autonomous machine;
   a system for performing simulation operations;
   a system for performing digital twin operations;
   a system for performing light transport simulation;
   a system for performing collaborative content creation for 3D assets;
   a system for performing deep learning operations;
   a system for performing remote operations;
   a system for performing real-time streaming;
   a system for generating or presenting one or more of augmented reality content, virtual reality content, or mixed reality content;
   a system implemented using an edge device;
   a system implemented using a robot;
   a system for performing conversational AI operations;
   a system implementing one or more multi-model language models;
   a system implementing one or more large language models (LLMs);
   a system implementing one or more vision language models (VLMs);
   a system for generating synthetic data;
   a system for generating synthetic data using AI;
   a system incorporating one or more virtual machines (VMs);
   a system implemented at least partially in a data center; or
   a system implemented at least partially using cloud computing resources.
Clause 14. A method comprising:
   obtaining one or more queries indicating at least one or more programs performed by one or more graphics processing units (GPUs);
   using one or more neural networks to generate computer program code to obtain performance information of the one or more programs based, at least in part, on the one or more queries; and
   using the computer program code to obtain the performance information to generate one or more responses to the one or more queries.
Clause 15. The method of clause 14, further comprising generating the computer program code based, at least in part, on one or more application programming interfaces (APIs).
Clause 16. The method of clause 14, further comprising obtaining the one or more queries from one or more users in connection with a chat interface.
Clause 17. The method of clause 14, wherein the performance information includes resource usage measurements of the one or more GPUs resulting from performance of the one or more programs.
Clause 18. The method of clause 14, further comprising accessing one or more web-based resources to generate the one or more responses.
Clause 19. The method of clause 14, wherein the computer program code includes one or more Python scripts.
Clause 20. The method of clause 14, wherein the method is performed by at least one of:
   a control system for an autonomous or semi-autonomous machine;
   a perception system for an autonomous or semi-autonomous machine;
   a system for performing simulation operations;
   a system for performing digital twin operations;
   a system for performing light transport simulation;
   a system for performing collaborative content creation for 3D assets;
   a system for performing deep learning operations;
   a system for performing remote operations;
   a system for performing real-time streaming;
   a system for generating or presenting one or more of augmented reality content, virtual reality content, or mixed reality content;
   a system implemented using an edge device;
   a system implemented using a robot;
   a system for performing conversational AI operations;
   a system implementing one or more multi-model language models;
   a system implementing one or more large language models (LLMs);
   a system implementing one or more vision language models (VLMs);
   a system for generating synthetic data;
   a system for generating synthetic data using AI;
   a system incorporating one or more virtual machines (VMs);
   a system implemented at least partially in a data center; or
   a system implemented at least partially using cloud computing resources.

## Claims

1. One or more processors comprising processing circuitry to:
use one or more neural networks to generate computer program code to obtain performance information of one or more programs performed by one or more graphics processing units (GPUs) based, at least in part, on one or more user queries indicating the one or more programs; and
execute the computer program code to generate one or more responses to the one or more user queries.

2. The one or more processors of claim 1, wherein the processing circuitry is to obtain the performance information by executing the computer program code to generate one or more performance reports, wherein the computer program code includes one or more computer program scripts.

3. The one or more processors of claim 1 or 2, wherein the processing circuitry is to use the one or more neural networks to generate the one or more responses based, at least in part, on the one or more user queries and the performance information.

4. The one or more processors of claim 1, 2, or 3, wherein the one or more programs include one or more compute kernels.

5. The one or more processors of claim 1-4, wherein the processing circuitry is to obtain occupancy information associated with the one or more programs to generate the one or more responses.

6. The one or more processors of any of claims 1-5, wherein the one or more neural networks include one or more language models.

7. The one or more processors of any of claims 1-6, wherein the processing circuitry is to generate the computer program code based, at least in part, on one or more application programming interfaces (APIs).

8. The one or more processors of any of claims 1-7, wherein the processing circuitry is to obtain the one or more queries from one or more users in connection with a chat interface.

9. The one or more processors of any of claims 1-8, wherein the processing circuitry is to access one or more web-based resources to generate the one or more responses.

10. The one or more processors of any of claims 1-9, wherein the one or more processors are to obtain the performance information based, at least in part, on a profile report generated by software associated with the one or more GPUs, wherein the performance information includes resource usage measurements of the one or more GPUs resulting from performance of the one or more programs.

11. The one or more processors of any of claims 1-10, wherein the one or more processors are to generate the one or more responses based, at least in part, on documentation associated with the one or more GPUs.

12. The one or more processors of any of claims 1-11, wherein the one or more processors are to perform one or more retrieval augmented generation (RAG) operations to generate the one or more responses.

13. The one or more processors of any of claims 1-12, wherein the one or more processors are comprised in at least one of:
a control system for an autonomous or semi-autonomous machine;
a perception system for an autonomous or semi-autonomous machine;
a system for performing simulation operations;
a system for performing digital twin operations;
a system for performing light transport simulation;
a system for performing collaborative content creation for 3D assets;
a system for performing deep learning operations;
a system for performing remote operations;
a system for performing real-time streaming;
a system for generating or presenting one or more of augmented reality content, virtual reality content, or mixed reality content;
a system implemented using an edge device;
a system implemented using a robot;
a system for performing conversational AI operations;
a system implementing one or more multi-model language models;
a system implementing one or more large language models (LLMs);
a system implementing one or more vision language models (VLMs);
a system for generating synthetic data;
a system for generating synthetic data using AI;
a system incorporating one or more virtual machines (VMs);
a system implemented at least partially in a data center; or
a system implemented at least partially using cloud computing resources.

14. A system comprising one or more processors to:
obtain one or more queries from one or more users indicating at least one or more programs;
use one or more neural networks to generate computer program code to obtain performance information of one or more graphics processing units (GPUs) used to perform the one or more programs based, at least in part, on the one or more queries; and
execute the computer program code to generate one or more responses to the one or more queries.

15. A method comprising:
obtaining one or more queries indicating at least one or more programs performed by one or more graphics processing units (GPUs);
using one or more neural networks to generate computer program code to obtain performance information of the one or more programs based, at least in part, on the one or more queries; and
using the computer program code to obtain the performance information to generate one or more responses to the one or more queries.
